(19) Europäisches Patentamt
European Patent Office
Office européen des brevets

(11) **EP 1 975 115 A1**

(12) **EUROPEAN PATENT APPLICATION**
published in accordance with Art. 158(3) EPC

(43) Date of publication:
**01.10.2008 Bulletin 2008/40**

(21) Application number: **07706796.5**

(22) Date of filing: **16.01.2007**

(51) Int Cl.:
*B66F 9/24* (2006.01)   *B60W 10/04* (2006.01)
*B60W 10/18* (2006.01)   *B60W 30/04* (2006.01)
*B66F 9/22* (2006.01)   *B60T 7/12* (2006.01)

(86) International application number:
**PCT/JP2007/050469**

(87) International publication number:
**WO 2007/081020 (19.07.2007 Gazette 2007/29)**

(84) Designated Contracting States:
**DE ES FR GB IT**

(30) Priority: **16.01.2006 JP 2006007337**

(71) Applicant: **Mitsubishi Heavy Industries, Ltd.**
**Minato-ku**
**Tokyo 108-8215 (JP)**

(72) Inventors:
 • **AKAKI, Tomohiro**
  **Hyogo 676-8686 (JP)**

 • **KAWAGUCHI, Masataka**
  **Hyogo 676-8686 (JP)**
 • **FUTAHASHI, Kensuke**
  **Hyogo 676-8686 (JP)**
 • **EGUCHI, Fujio**
  **Kanagawa 229-1193 (JP)**
 • **MURATA, Shinjiro**
  **Kanagawa 229-1193 (JP)**

(74) Representative: **Bongiovanni, Simone et al**
 **Studio Torta S.r.l**
 **Via Viotti, 9**
 **10121 Torino (IT)**

(54) **FORKLIFT TRUCK AND CONTROL METHOD FOR PREVENTING OVERTURNING OF FORKLIFT TRUCK**

(57)    A forklift which is capable of controlling overturning and a method of controlling safety against overturning for a forklift are provided. In a forklift having a controller (20) for controlling the traveling state of a vehicle, the controller (20) is **characterized by** estimating the traveling state at a predetermined time ahead and, when the vehicle velocity at that time exceeds a maximum allowable vehicle velocity before generating a likelihood of overturning, applying the brakes and, when a no-overturning state is achieved thereafter, releasing the brakes.

FIG. 6

CURRENT STATE
(1) BRAKE ON, ACCELERATOR OFF
ESTIMATED VALUE AFTER TIME T HAS ELAPSED
OVERTURN (CURRENT MACHINE)
VELOCITY V
Vmax
V1
(2) BRAKE OFF, ACCELERATOR ON
STEERING ANGLE θ

EP 1 975 115 A1

**Description**

Technical Field

The present invention relates to a forklift and a method of controlling safety against overturning for a forklift.

Background Art

In the traveling operation of a forklift, when an operator carries out a turning operation without sufficiently decelerating the vehicle, a lateral force (centrifugal force) is generated at the vehicle body, and the vehicle is likely to be overturned (for example see Patent Document 1).
Patent Document 1: Japanese Unexamined Patent Application Publication No. 2005-200212

Disclosure of Invention

A method of controlling safety against overturning is disclosed in Patent Document 1. However, for enhanced safety, development of the technology for preventing the overturning further effectively without impairing the workability of the operator is desired.
In view of such circumstances, it is an object of the present invention to provide a forklift which is effectively restrained from overturning and a method of controlling safety against overturning for a forklift.
A first aspect of the present invention provides a forklift having a controller for controlling the traveling state of a vehicle wherein the controller estimates the traveling state at a predetermined time ahead and, when the vehicle velocity at that time exceeds a maximum allowable vehicle velocity before generating a likelihood of overturning, applies the brakes and, when a no-overturning state is achieved thereafter, releases the brakes.
According to the first aspect of the present invention, the traveling state at a predetermined time ahead is estimated on the basis of, for example the change in vehicle velocity or/and the change in steering angle. For example, when the operator carries out an operation to suddenly increase the steering angle, and when it is estimated that the vehicle velocity exceeds the maximum allowable vehicle velocity by this operation, the control to forcedly apply the brakes is carried out. When the no-overturning state is achieved thereafter, the brakes are released.
In the invention described above, the controller preferably judges whether or not the no-overturning state is achieved on the basis of the vehicle velocity.
Accordingly, the brakes are released when the vehicle velocity is lowered sufficiently.
In the invention described above, the controller preferably judges whether or not the no-overturning state is achieved on the basis of the steering angle.
Accordingly, the brakes are released when the radius of turn is sufficiently large.
In the invention described above, the controller preferably calculates the maximum allowable vehicle velocity on the basis of the steering angle of the vehicle, the elevated height of a lift and the load weight.
Accordingly, when steering angle increases, the radius of turn is reduced, whereby the likelihood of overturning increases. When the elevated height of the lift and the load weight are high, the center of gravity is correspondingly high, whereby the likelihood of overturning increases. Therefore, the maximum allowable vehicle velocity is calculated from a predetermined arithmetic expression using these values as parameters. It is also possible to store a map in which the relations among these parameters are obtained in advance, and read the same according to the parameter.
In the invention described above, the controller preferably applies the brakes and, simultaneously, switches the accelerator off, and restores the accelerator in association with the release of the brakes.
In this configuration, the acceleration is forcedly prohibited in association with the brakes. In other words, the acceleration is prohibited irrespective of the operation of the operator. Accordingly, the acceleration in the case where there is likelihood of overturning is restrained.
In the invention described above, the controller preferably applies the brakes and, simultaneously, switches the accelerator off, and restores the accelerator after the brakes are released.
In this configuration, the timing of the release of the brakes and of the restoration of the accelerator is shifted, so that smooth transition to the normal travel is achieved.
In the invention described above, the controller preferably releases the brakes gradually according to the state of the vehicle.
In this configuration, by changing the braking force step-by-step, smooth deceleration and transfer to the normal travel are achieved. For example, when the vehicle velocity is lowered to a certain degree, the forced braking force is reduced to a half and then the brakes are completely released.
In the invention described above, preferably, a brake control device including a brake device for applying the brakes to the wheels by a hydraulic pressure, a hydraulic pump for delivering the hydraulic pressure to the brake device side, and a valve element configured to control the flow of the hydraulic pressure is provided, and the controller carries out the brake control of the vehicle by controlling the valve element.

In this configuration, preferably, a hydraulic cylinder for transmitting the hydraulic pressure by edge-cutting an oil is interposed between the valve element and the brake device.

In this configuration, the hydraulic cylinder applies a pressure to a hydraulic system on the brake device side when the hydraulic pressure is supplied from the hydraulic pump. Accordingly, oil is not mixed between the upstream and the downstream of the hydraulic cylinder, and hence different types of oil may be used between a normal brake circuit and an additionally installed hydraulic system.

In the configuration described above, preferably, the hydraulic pump is a pump for switching a function to intake oil from one opening and discharge the oil from the other opening to the brake device side, or to intake oil from the other opening and discharge the oil from the one opening to the brake device side by switching the direction of rotation, and includes a first pressure adjustor for adjusting the pressure of the oil discharged from the one opening and a second pressure adjustor for adjusting the pressure of the oil discharged from the other opening, and a pressure adjusted by the first pressure adjustor and a pressure adjusted by the second pressure adjustor are different from each other.

In this configuration, by switching the direction of rotation of the hydraulic pump, a braking force applied to the wheel when the pressure of oil (hydraulic pressure) adjusted by the first pressure adjustor is transmitted to the brake device and a braking force applied to the wheel when the hydraulic pressure adjusted by the second pressure adjustor is transmitted to the brake device may be differentiated.

For example, when the lift of the forklift lifts a heavy load and hence the height of the center of gravity is increased, a relatively weak braking force may be applied to the wheel to prevent the forklift from overturning, while when the height of the center of gravity of the forklift is low, a relatively strong braking force is applied to the wheel to prevent the damping force from being lowered.

In the configuration described above, preferably, the hydraulic pump is a pump for switching the function to intake oil from one opening and discharge the oil from the other opening to the brake device side, or to intake oil from the other opening and discharge the oil from the one opening to the brake device side by switching the direction of rotation, includes a first pressure adjustor for adjusting the pressure of the oil discharged from the one opening and a second pressure adjustor for adjusting the pressure of the oil discharged from the other opening, and a pressure adjusted by the first pressure adjustor and a pressure adjusted by the second pressure adjustor are different from each other, a third pressure adjustor for adjusting the pressure of oil discharged from the first opening and the second opening is provided, the valve element controls flowing-in of the oil into the third pressure adjustor, and the pressure adjusted by the third pressure adjustor is different from the pressure adjusted by the first pressure adjustor and the second pressure adjustor.

In this configuration, by allowing the oil to flow into the third pressure adjustor, the hydraulic pressure adjusted by the third pressure adjustor is transmitted to the brake device, so that a braking force different from a braking force applied to the wheel when the hydraulic pressures adjusted by the first and second pressure adjustors are transmitted to the brake device is applied to the wheel. Therefore, finer control of the braking force to be applied to the wheel than in the method of adjusting the hydraulic pressure to be transmitted to the brake device in two stages is enabled, so that the forklift is prevented from overturning, and the damping force is prevented from lowering.

In the configuration described above, preferably, a plurality of pressure adjustors for adjusting the hydraulic pressure transmitted to the brake device to different pressures respectively and a branching valve for introducing at least part of the oil delivered from the hydraulic pump to any of the plurality of pressure adjustors are provided.

In this configuration, by selecting the pressure adjustor for introducing the oil by the branching valve, a hydraulic pressure corresponding to the selected pressure adjustor is transmitted to the brake device, so that selection of the braking force to be applied to the wheel is enabled.

In the configuration described above, preferably, a brake operating unit which generates a hydraulic pressure on the basis of the instruction of the driver and transmits the generated hydraulic pressure to the brake device and a selector valve for transmitting only the higher hydraulic pressures to the brake device from between the hydraulic pressure transmitted from the hydraulic pump and the hydraulic pressure transmitted from the brake operating unit.

In this configuration, with the provision of the selector valve, the oil which transmits the hydraulic pressure from the brake operating unit to the brake device is prevented from flowing into the brake device or the brake control device. Therefore, the oil in the brake operating unit is prevented from running short.

With the provision of the selector valve, the brake control unit generates the higher hydraulic pressure than the hydraulic pressure transmitted from the brake operating unit even while the driver is operating the brake operating unit and applying a braking force to the wheel, so that application of the braking force on the basis of the hydraulic pressure of the brake control unit is enabled.

In the configuration described above, preferably, the controller controls the hydraulic pump when applying the brakes to apply the hydraulic pressure to the brake device side.

In this configuration, the hydraulic pump (more specifically, the motor provided for the pump) is directly controlled at the time when the overturning preventing system is in operation to generate the pressure, so that the structure is simplified and the cost is restrained.

In this configuration, preferably, the controller controls the hydraulic pump when applying the brakes to apply the hydraulic pressure to the brake device side, and the controller corrects a deceleration instruction value on the basis of the relation between the deceleration instruction value supplied by the driver and the deceleration information on the basis of the velocity change, and controls the hydraulic pump on the basis of the deceleration instruction value after correction.

In this configuration, the relation between the deceleration instruction value entered by the driver and the damping force is maintained constant by controlling the hydraulic pump on the basis of the deceleration instruction value after correction.

For example, there is a case in which the braking force applied to the wheel is lowered even when the same hydraulic pressure is transmitted due to the causes such as degradation of the brake device. In such a case, the relation between the deceleration instruction value entered by the driver and the deceleration information on the basis of the change in velocity of the forklift is changed. The controller carries out correction to compensate the lowered braking force to the deceleration instruction value on the basis of the change in relation, and outputs the deceleration instruction value after correction to the hydraulic pump.

A second aspect of the present invention provides a method of controlling safety against overturning for a forklift which estimates the traveling state at a predetermined time ahead and, when the vehicle velocity at that time exceeds a maximum allowable vehicle velocity before generating a likelihood of overturning, applies the brakes and, when a no-overturning state is achieved thereafter, releases the brakes.

According to the second aspect of the present invention, the traveling state at a predetermined time ahead is estimated on the basis of, for example the change in vehicle velocity or/and the change in steering angle. For example, when an operator carries out an operation to suddenly increase the steering angle, and when it is estimated that the vehicle velocity exceeds the maximum allowable vehicle velocity by this operation, the control to forcedly apply the brakes is carried out. When the no-overturning state is achieved thereafter, the brakes are released.

According to the forklift and the method of controlling safety against overturning for a forklift in the present invention, turning of the vehicle while effectively preventing the overturning is enabled, and transition to the normal traveling is enabled with the minimized limit of operation of the operator without stopping the vehicle, so that the workability is improved.

Brief Description of Drawings

[FIG. 1] Fig. 1 is a general perspective view of a forklift shown as a first embodiment of the present invention.
[FIG. 2] Fig. 2 is a block diagram showing a flow of respective sensor signals of the forklift shown in Fig. 1.
[FIG. 3] Fig. 3 is a drawing showing a configuration of a brake control device provided on the forklift shown in Fig. 1.
[FIG. 4] Fig. 4 is a drawing showing a configuration of an electromagnetic relief valve provided on the brake control device shown in Fig. 1.
[FIG. 5] Fig. 5 is a flowchart showing a overturning preventing control by a controller provided on the forklift shown in Fig. 1.
[FIG. 6] Fig. 6 is a drawing showing a vehicle velocity V and a steering angle θ, and a maximum allowable vehicle velocity Vmax.
[FIG. 7] Fig. 7 is a drawing showing a method of estimating the steering angle by the controller.
[FIG. 8] Fig. 8 is a flowchart showing the overturning preventing control by the controller provided on the forklift shown as a second embodiment of the present invention.
[FIG. 9] Fig. 9 is a drawing showing a vehicle velocity V and a steering angle θ, and a maximum allowable vehicle velocity Vmax.
[FIG. 10] Fig. 10 is a flowchart showing the overturning preventing control by the controller provided on the forklift shown as a third embodiment of the present invention.
[FIG. 11] Fig. 11 is a drawing showing a vehicle velocity V and a steering angle θ, and a maximum allowable vehicle velocity Vmax.
[FIG. 12] Fig. 12 is a flowchart showing the overturning preventing control by the controller provided on the forklift shown as a fourth embodiment of the present invention.
[FIG. 13] Fig. 13 is a drawing showing a vehicle velocity V and a steering angle θ, and a maximum allowable vehicle velocity Vmax.
[FIG. 14] Fig. 14 is a flowchart showing the overturning preventing control by the controller provided on the forklift shown as a fifth embodiment of the present invention.

[FIG. 15] Fig. 15 is a drawing showing a vehicle velocity V and a steering angle θ, and a maximum allowable vehicle velocity Vmax.

[FIG. 16] Fig. 16 is a flowchart showing the overturning preventing control by the controller provided on the forklift shown as a sixth embodiment of the present invention.

[FIG. 17] Fig. 17 is a drawing showing a vehicle velocity V and a steering angle θ, and a maximum allowable vehicle velocity Vmax.

[FIG. 18] Fig. 18 is a flowchart showing the overturning preventing control by the controller provided on the forklift shown as a seventh embodiment of the present invention.

[FIG. 19] Fig. 19 is a drawing showing a vehicle velocity V and a steering angle θ, and a maximum allowable vehicle velocity Vmax.

[FIG. 20] Fig. 20 is a drawing showing a configuration of the brake control device provided on the forklift shown as an eighth embodiment of the present invention.

[FIG. 21] Fig. 21 is a drawing showing a configuration of the brake control device provided on the forklift shown as a ninth embodiment of the present invention.

[FIG. 22] Fig. 22 is a drawing showing a configuration of the brake control device provided on the forklift shown as a tenth embodiment of the present invention.

[FIG. 23] Fig. 23 is a block diagram for explaining the overturning preventing control by a controller shown in Fig. 22.

[FIG. 24] Fig. 24 is a drawing for explaining a braking force map stored in a braking force calculator in Fig. 23.

[FIG. 25] Fig. 25 is a graph for explaining a method of judging by a brake judging unit in Fig. 23.

[FIG. 26] Fig. 26 is a drawing showing a configuration of the brake control device provided on the forklift shown as an eleventh embodiment of the present invention.

[FIG. 27] Fig. 27 is a block diagram for explaining the overturning preventing control by a controller shown in Fig. 26.

[FIG. 28] Fig. 28 is a drawing showing a configuration of the brake control device provided on the forklift shown as a twelfth embodiment of the present invention.

[FIG. 29] Fig. 29 is a block diagram for explaining the overturning preventing control by a controller shown in Fig. 28.

[FIG. 30] Fig. 30 is a drawing showing a configuration of the brake control device provided on the forklift shown as a thirteenth embodiment of the present invention.

[FIG. 31] Fig. 31 is a block diagram for explaining a method of controlling according to the thirteenth embodiment of the present invention.

[FIG. 32] Fig. 32 is a flowchart for explaining a method of controlling by a controller shown in Fig. 31.

[FIG. 33] Fig. 33 is a graph showing a primary relational expression on the basis of a braking force Fb and a brake command Pb.

Explanation of Reference:

5: brake
5a: brake device
18, 118, 218, 318, 418, 518: brake control device
20: controller
18b, 118b, 218b, 318b, 418b: electromagnetic valve (valve element)
18a, 218, 318a: hydraulic pump
118h: hydraulic cylinder
321: one opening
325: the other opening
327: high-pressure relief valve (first pressure adjustor)
329: low-pressure relief valve (second pressure adjustor)
429: intermediate-pressure relief valve (second pressure adjustor)
431: low-pressure relief valve (third pressure adjustor)
518b: four-way valve (branching valve)
618: shuttle valve (selector valve)

Best Mode for Carrying Out the Invention

Referring now to the attached drawings, the embodiments of the present invention will be described below.

<First Embodiment>

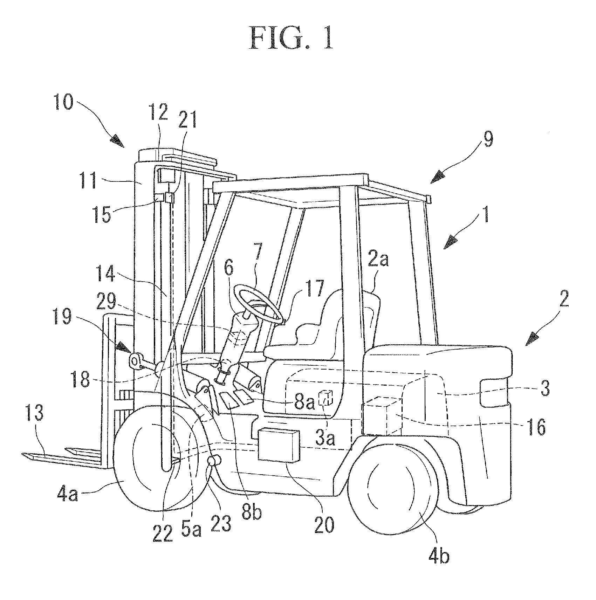

Fig. 1 is a drawing for explaining a first embodiment of the present invention. First of all, the entire structure of a forklift 1 will be described. The forklift 1 includes a vehicle body 2, and the vehicle body 2 includes a diesel engine 3 stored therein as a drive assembly. The engine 3 includes an output control device 3a attached thereto. The power of the drive assembly is transmitted to front wheels 4a via a transmission, not shown. Rear wheels 4b are steering wheels and the power is not transmitted thereto. The front wheel 4a includes a brake device 5a attached thereto.

Disposed on the upper center of the vehicle body 2 is a driver's seat 2a. A steering 7 attached to a steering supporting member 6 is disposed in front of the driver's seat 2a. Disposed in the vicinity of the root portion of the steering supporting member 6 are an accelerator pedal 8a and a brake pedal 8b. In order to protect a driver seated on the driver's seat 2a, a protecting member 9 includes four vertical posts and an upper frame attached to the upper end of the vertical posts. The accelerator pedal 8a is directly connected to the output control device 3a of the engine 3. The brake pedal 8b is connected to the brake device 5a via a hydraulic circuit described later.

Attached to the front end of the vehicle body 2 is an elevating device 10. The elevating device 10 has a general structure and includes an outer mast 11 attached to the vehicle body 2, an inner mast 12 attached to the outer mast 11 so as to be capable of moving up and down, and a fork 13 attached to the inner mast 12 so as to be capable of moving up and down.

The inner mast 12 is moved up and down by a piston 15 which moves up and down by a hydraulic lift cylinder 14. A pulley, not shown, is attached to the upper end of the inner mast 12, and a chain is provided so as to pass along the upper side of the pulley. One end of the chain is fixed to the fork 13, and the other end thereof is fixed to the outer mast 11. When the inner mast 12 is moved up and down, the fork 13 moves up and down at a speed double the speed of up and down movement of the inner mast 12. The inner mast 12 is adapted to be inclined by a tilting device 19. A hydraulic control mechanism 16 for controlling the hydraulic pressure of the lift cylinder 14 is mounted in the interior of the vehicle body 2. The hydraulic control mechanism 16 is operated by the driver via a lift lever 17. The hydraulic control mechanism 16 supplies the hydraulic pressure also to the tilting device 19.

A displacement sensor 21 for detecting displacement of the piston 15 is attached to the upper end of the lift cylinder 14. A pressure sensor 22 for detecting the pressure in the lift cylinder is attached to the lower portion of the lift cylinder 14. A velocity sensor 23 for detecting the number of revolutions of the front wheels 4a is attached to the vehicle body 2 at a position in the vicinity of the front wheel 4a. The steering supporting member 6 is further provided with a steering angle sensor 29 for detecting the steering angle of the steering 7.

The sensors are coupled to a controller 20 attached to the vehicle body 2, respectively. A brake control device 18 is provided on the brake device 5a and the brake control device 18 is also coupled to the controller 20.

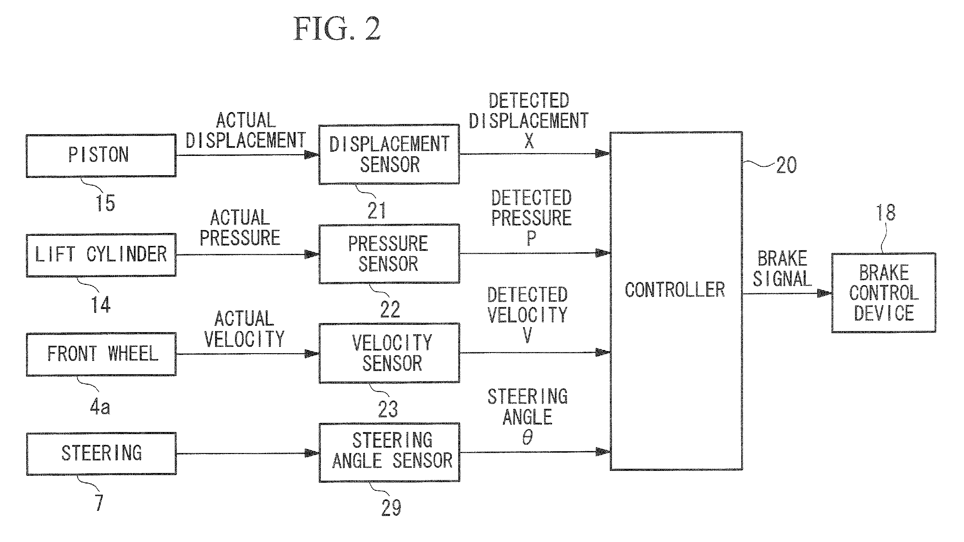

Fig. 2 is a drawing for explaining a flow of signal among above-described devices. The displacement of the piston 15 is detected by the displacement sensor 21, and the detected displacement X is sent to the controller 20. The pressure of the lift cylinder is detected by the pressure sensor 22 and the detected pressure P is sent to the controller 20. The velocity (rotational velocity) of the front wheel 4a is detected by the velocity sensor 23, and the detected velocity V is sent to the controller 20. The steering angle $\theta$ is detected by the steering angle sensor 29, and is sent to the controller 20. As described later, the likelihood of overturning is estimated by the controller 20, and when there is likelihood of overturning, the brake control device 18 is controlled to control the velocity of the vehicle body to an adequate value.

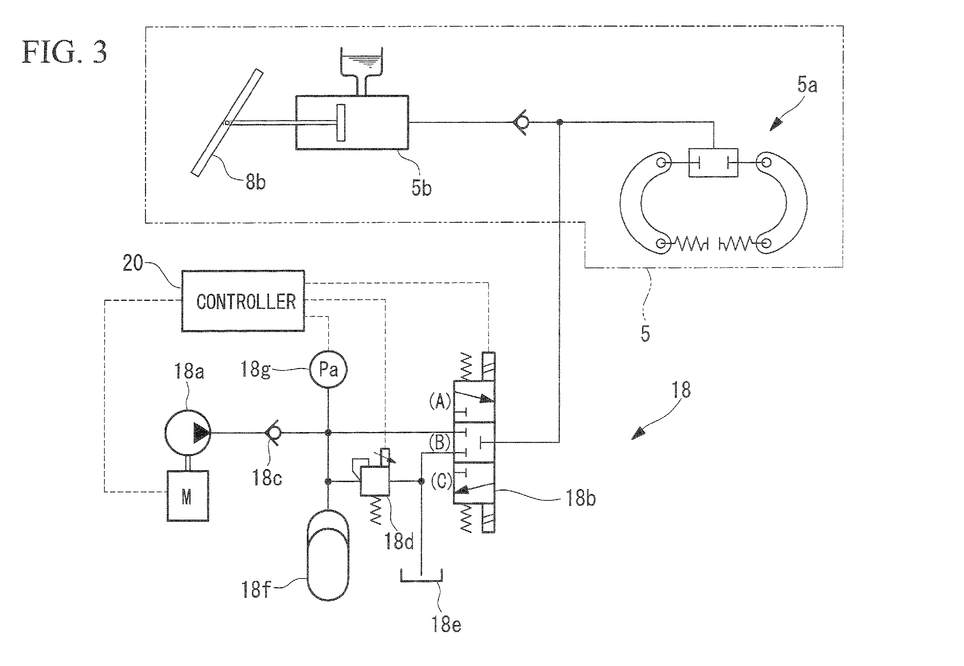

Subsequently, the configuration of the brake control device 18 is described in detail. As shown in Fig. 3, a brake 5 of the forklift 1 includes the brake device 5a having a brake disk and a caliper for pressing a friction member against the brake disk or the like, a brake pedal 8b and a master cylinder 5b for converting an operational force applied to the brake pedal 8b to the hydraulic pressure and sending the same to the brake device 5a.

The brake control device 18 is a device for sending the hydraulic pressure generated at a hydraulic pump 18a having a motor to the brake device 5a via an electromagnetic valve (valve element) 18b. The electromagnetic valve 18b is adapted to be switched to (A) a position to send the hydraulic pressure of the hydraulic pump 18a to the brake device 5a, (B) a position to block the hydraulic pressure between the brake control device 18 and the brake device 5a and (C) a position to return the hydraulic pressure from the brake device 5a. When the electromagnetic valve 18b is at the position (A), the hydraulic pressure generated at the hydraulic pump 18a passes through a check valve 18c positioned between the hydraulic pump 18a and the electromagnetic valve 18b. The hydraulic circuit is branched on the downstream side of the check valve 18c, one of those is provided to the electromagnetic valve 18b, and the other one passes through an electromagnetic relief valve 18d and returned to a reserve tank 18e. An accumulator 18f is provided on the upstream side of the electromagnetic relief valve 18d. The hydraulic pressure returned from the brake device 5a when the electromagnetic valve 18b is at the position (C) is returned to the reserve tank 18e. The hydraulic pump 18a, the electromagnetic valve 18b, the electromagnetic relief valve 18d and a hydraulic sensor 18g provided on the downstream side of the check valve 18c are controlled by the controller 20.

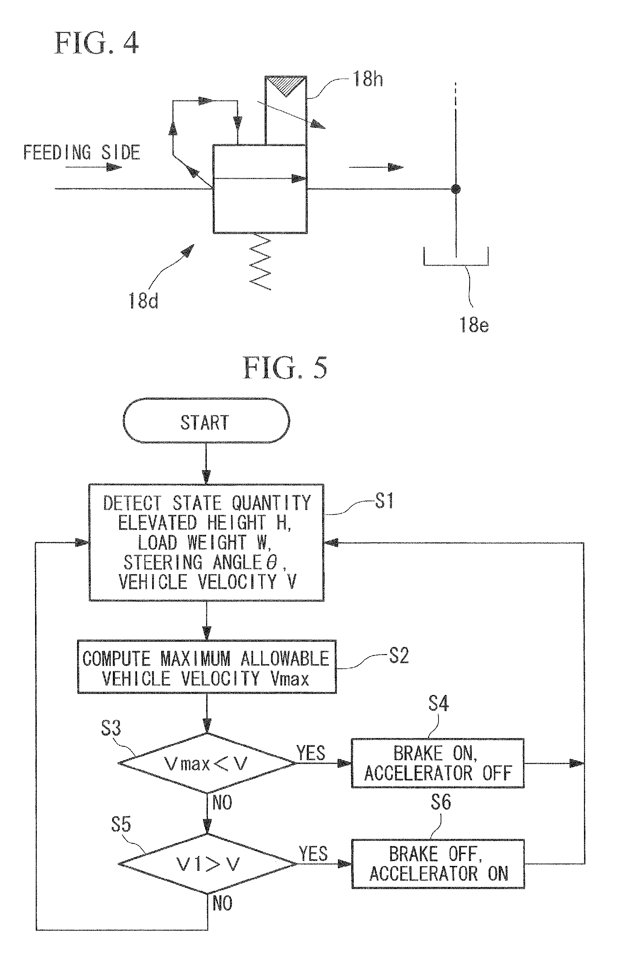

The electromagnetic relief valve 18d is a valve for controlling the hydraulic pressure provided from the hydraulic pump 18a to the electromagnetic valve 18b as shown in Fig. 4. When an adjustor 18h is controlled by the controller 20, the hydraulic pressure is released to the reserve tank 18e in a case where the pressure on the feeding side is equal to or larger than a predetermined value.

Subsequently, the overturning preventing control by the controller 20 will be described in detail. The controller 20 carries out the overturning preventing control according to a flow shown in Fig. 5.

In Step S1, the respective state quantities are detected. The piston displacement X detected by the displacement sensor 21 is substituted into a computing unit (stored in the controller 20) for obtaining the load height H from the piston displacement X to calculate the elevated height H. Since the height of the actual center of gravity of the load with respect to the fork 13 varies with the load, a constant virtual value with respect to the fork 13 is employed. Then, a lift cylinder pressure P detected by the pressure sensor 22 is substituted into a computing unit (stored in the controller 20) for obtaining the load weight W from the lift cylinder pressure P to calculate the load weight W. The velocity V and the steering angle $\theta$ are detected by the velocity sensor 23 and the steering angle sensor 29, respectively.

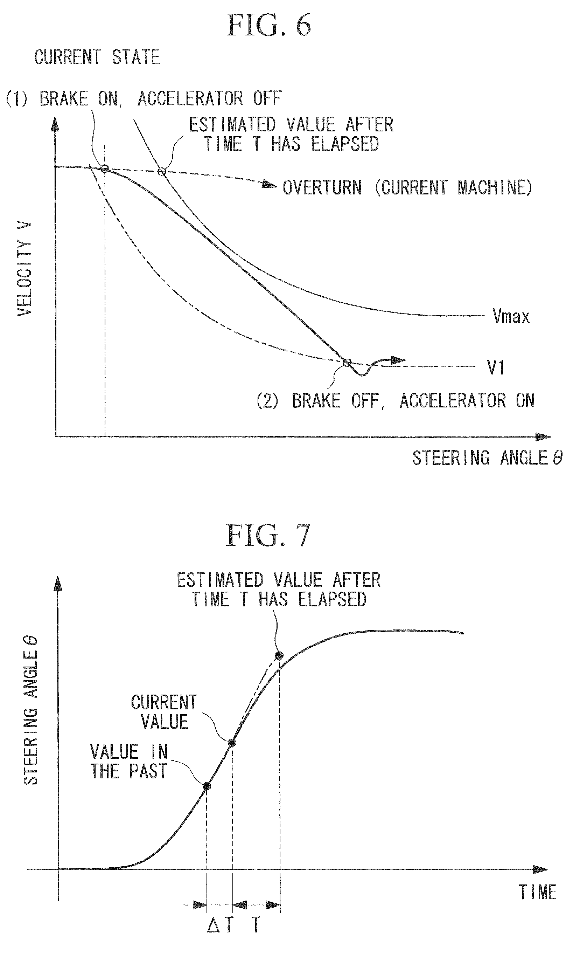

Subsequently, the maximum allowable vehicle velocity Vmax is obtained (Step S2). The maximum allowable vehicle velocity Vmax is shown in Fig. 6. When the state quantity exceeds the maximum allowable vehicle velocity Vmax line, the vehicle is likely to overturn. For example, when the steering angle $\theta$ is large the radius of turn is small, and hence the likelihood of overturning is high even though the vehicle velocity is the same. Therefore, the controller 20 estimates the vehicle velocity at a predetermined time ahead on the basis of the current state and, when the estimated value exceeds the maximum allowable vehicle velocity Vmax, turns the brake ON and the accelerator OFF (Steps S3, S4). For example, as shown in Fig. 7, the controller 20 obtains the steering angle $\theta$ at a predetermined time ahead (after the time T) from the increased amount of steering angle for the time $\Delta T$. In the same manner, the controller 20 also estimates the velocity V after the time T. Furthermore, the controller 20 calculates the maximum allowable vehicle velocity Vmax by a predetermined expression using predetermined parameters (elevated height H, load weight W and steering angle $\theta$). When the steering angle $\theta$ and the vehicle velocity V after the time T exceeds the maximum allowable vehicle velocity Vmax (when the estimated value exceeds the maximum allowable vehicle velocity Vmax as shown by a broken line in Fig. 6), the brake is turned ON and the accelerator is turned OFF.

The brake-ON control is carried out by the brake control device 18. The hydraulic pump 18a is activated in advance, and the hydraulic pressure generated by the hydraulic pump 18a is provided to the brake device 5a by switching the electromagnetic valve 18b to the position (A). Accordingly, the brake is operated without the operation of the brake pedal 8b. The accelerator-OFF control is carried out by controlling the output control device 3a. The accelerator is turned OFF irrespective of the operation of the accelerator pedal 8a by the operator. After Step S4, the process goes back to Step S1.

When the brake is already ON by the process in Step S4, whether or not the vehicle velocity V underruns a stable vehicle velocity V1 is judged in Step S5. When it underruns the stable vehicle velocity V1, the brake-OFF accelerator-ON control is carried out in Step S6. The brake-OFF control is to release the brake-ON control carried out in Step S4, and the electromagnetic valve 18b is switched to (C) and the hydraulic pressure applied to the brake device 5a is released to the reserve tank 18e. The accelerator-ON control is carried out by controlling the output control device 3a. It makes the operation of the accelerator pedal 8a by the operator effective. The stable vehicle velocity V1 is a sufficiently low vehicle velocity which does not cause the overturn, and may be obtained by, for example, V1=0.8 x Vmax. After Step S6, the process goes back to Step S1.

If NO in Step S5, the processes are repeated from Step S1.

As shown in Fig. 6, after the brake-ON accelerator-OFF control, the vehicle velocity is lowered and the vehicle velocity is restrained from exceeding the maximum allowable vehicle velocity Vmax. When the vehicle velocity is sufficiently low, the brake is turned OFF and the accelerator is turned ON, and the operation of the operator is restored.

As described above, according to the forklift and the method of controlling safety against overturning for a forklift in this embodiment, the turning of the vehicle while effectively preventing the overturning is enabled, and transition to the normal traveling is enabled with the minimized limit of operation of the operator without stopping the vehicle, so that the workability is improved.

<Second Embodiment>

Subsequently, a second embodiment of the present invention will be described. The same components as the first embodiment are designated by the same reference numerals and description will be omitted.

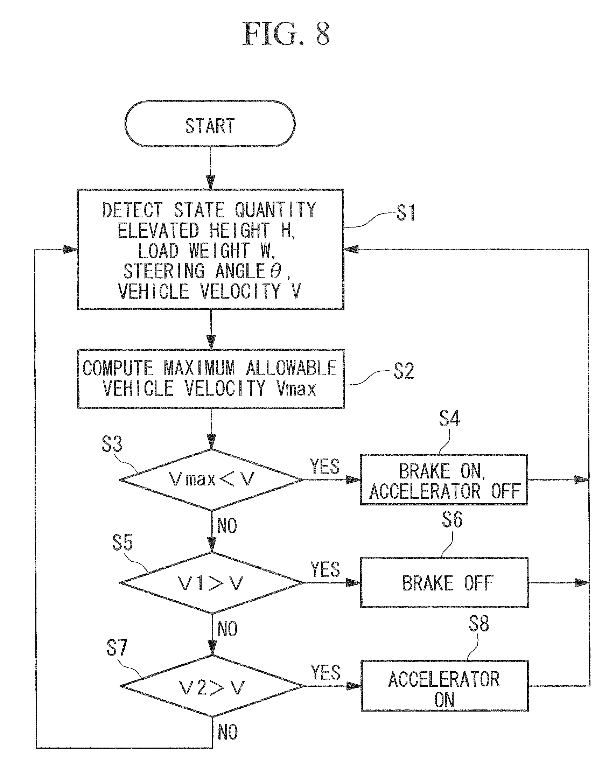

In this embodiment, the controller 20 carries out the overturning preventing control according to a flow shown in Fig. 8. The processes from Step S1 to Step S4 are the same as in the first embodiment, and hence description will be omitted. When the brake is already ON by the process in Step S4, whether or not the vehicle velocity V underruns the first stable vehicle velocity V1 is judged in Step S5. When it underruns the first stable vehicle velocity V1, only the brake OFF control is carried out in Step S6 and the process goes back to Step S1.

Subsequently, whether or not the vehicle velocity V underruns a second stable vehicle velocity V2 is judged (Step S7).

The second stable vehicle velocity V2 is a predetermined value which satisfies a condition V2<V1. When the vehicle velocity underruns the second stable vehicle velocity V2, the accelerator ON control is carried out in Step S8.
Since the brake-OFF control and the accelerator ON control are the same as in the first embodiment, detail description thereof is omitted.
Then, the steps from S1 to S8 shown above are repeated.

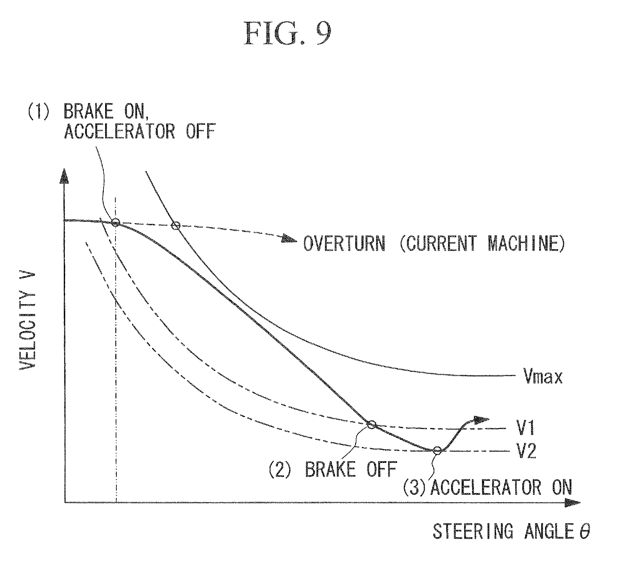

In this embodiment, as shown in Fig. 9, after the brake-ON accelerator-OFF control, the vehicle velocity is lowered, and the vehicle velocity is restrained from exceeding the maximum allowable vehicle velocity Vmax. When the vehicle velocity is sufficiently low and underruns the first stable vehicle velocity V1, the brake is turned OFF and, when it underruns the second stable vehicle velocity, the accelerator is turned ON and the operation of the operator is restored.

As described above, according to the forklift and the method of controlling safety against overturning for a forklift in this embodiment, the turning of the vehicle while effectively preventing the overturning is enabled, and the minimized limit of operation of the operator is achieved, so that the workability is improved. In addition, in this embodiment, the timing of the release of the brakes and of the restoration of the accelerator is shifted, so that smooth transition to the normal travel is achieved.

<Third Embodiment>

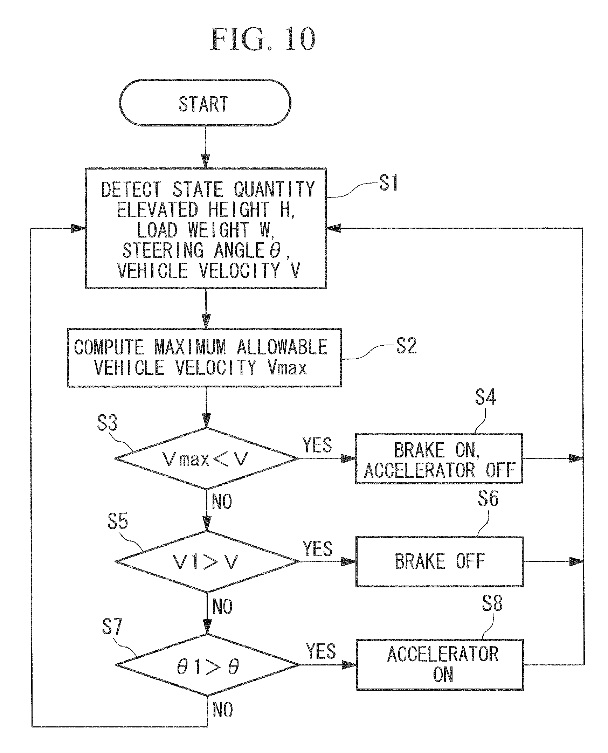

Subsequently, a third embodiment of the present invention will be described. The same components as the first embodiment are designated by the same reference numerals and description will be omitted.
In this embodiment, the controller 20 carries out the overturning preventing control according to a flow shown in Fig. 10.
The processes from Step S1 to Step S6 are the same as in the second embodiment, and hence description will be omitted.

In Step S7, whether or not the steering angle θ is reduced to an angle smaller than the threshold value θ1 is judged and, when the steering angle θ is reduced to an angel smaller than θ1, the accelerator-ON control is carried out (Step S8). In other words, it is adapted to allow the acceleration only when the operator turns back the steering and hence the radius of turn is sufficiently large.
Since the brake-OFF control and the accelerator-ON control are the same as in the first embodiment, detail description thereof is omitted.
Then, the steps from S1 to S8 shown above are repeated.

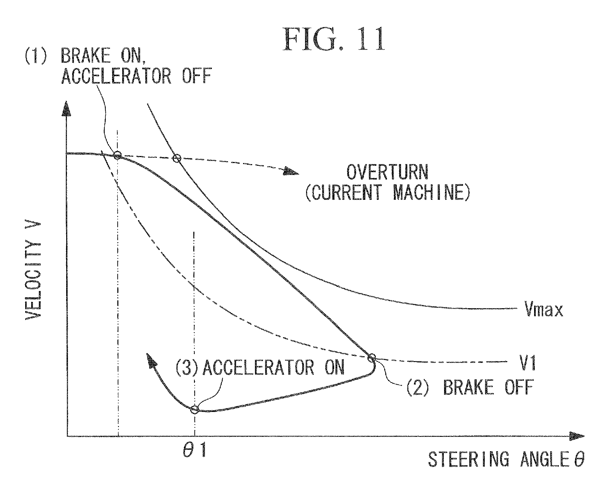

In this embodiment, as shown in Fig. 11, after having carried out the brake-ON accelerator-OFF control, the vehicle velocity is lowered and the vehicle velocity is restrained from exceeding the maximum allowable vehicle velocity Vmax. When the vehicle velocity is sufficiently low and underruns the first stable vehicle velocity V1, the brake is turned OFF and, when the steering angle θ underruns θ1, the accelerator is turned ON and the operation of the operator is restored.

As described above, according to the forklift and the method of controlling safety against overturning for a forklift in this embodiment, the turning of the vehicle while effectively preventing the overturning is enabled, and the minimized limit of operation of the operator is achieved, so that the workability is improved. In addition, in this embodiment, acceleration in a state in which the steering angle exceeds the threshold value is prohibited, and hence traveling with higher safety is enabled.

<Fourth Embodiment>

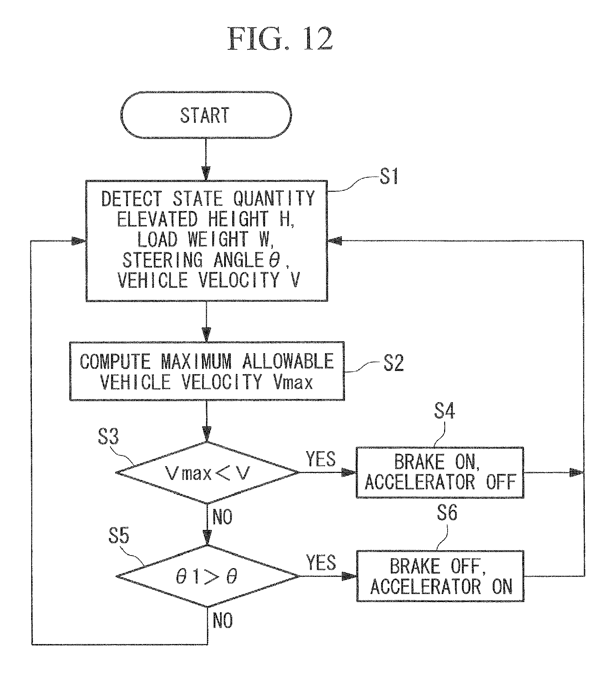

Subsequently, a fourth embodiment of the present invention will be described. The same components as the first embodiment are designated by the same reference numerals and description will be omitted.
In this embodiment, the controller 20 carries out the overturning preventing control according to a flow shown in Fig. 12.
The processes from Step S1 to Step S4 are the same as in the first embodiment, and hence description will be omitted.

After having carried out the brake-ON accelerator-OFF control in Steps S3 and S4, whether or not the steering angle θ is reduced to an angle smaller than the threshold value θ1 is judged in Step S5.
When the threshold value θ is reduced to an angle smaller than the threshold value θ1, the brake-OFF control and the accelerator-ON control are carried out (Step S6). In other words, it is adapted to allow the acceleration when the operator turns back the steering and hence the radius of turn is sufficiently large.
Since the brake-OFF control and the accelerator-ON control are the same as in the first embodiment, detail description thereof is omitted.
Then, the steps from S1 to S6 shown above are repeated.

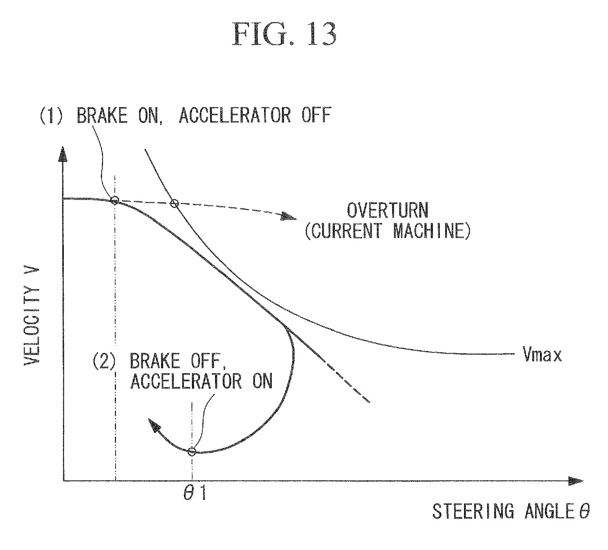

In this embodiment, as shown in Fig. 13, after having carried out the brake-ON accelerator-OFF control, the vehicle velocity is lowered and the vehicle velocity is restrained from exceeding the maximum allowable vehicle velocity Vmax. When the operator returns the steering and hence the radius of turn is sufficiently large, the brake is turned OFF and the accelerator is turned ON, and the operation of the operator is restored.

As described above, according to the forklift and the method of controlling safety against overturning for a forklift in this embodiment, the turning of the vehicle while effectively preventing the overturning is enabled, and the minimized limit of operation of the operator is achieved, so that the workability is improved. In addition, in this embodiment, acceleration in a state in which the steering angle exceeds the threshold value is prohibited, and hence traveling with higher safety is enabled.

<Fifth Embodiment>

Subsequently, a fifth embodiment of the present invention will be described. The same components as the fourth embodiment are designated by the same reference numerals and description will be omitted.

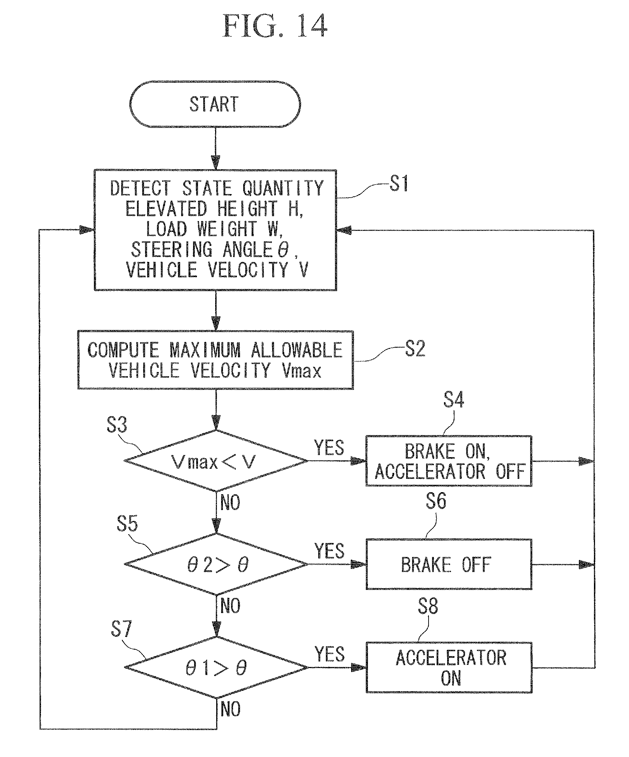

In this embodiment, the controller 20 carries out the overturning preventing control according to a flow shown in Fig. 14. The processes from Step S1 to Step S4 are the same as in the fourth embodiment, and hence description will be omitted.

After having carried out the brake-ON accelerator-OFF control in Steps S3 and S4, whether or not the steering angle θ is reduced to an angle smaller than the threshold value θ2 is judged in Step S5. When the steering angle θ is reduced to an angle smaller than the threshold value θ2, the brake-OFF control is carried out (Step S6). Then, in Step S7, whether or not the steering angle θ is reduced to an angle smaller than the threshold value θ1 is judged. When the steering angle θ is reduced to an angle smaller than the threshold value θ1, the accelerator-ON control is carried out (Step S8).

In other words, it is adapted to allow the acceleration when the operator turns back the steering and hence the radius of turn is sufficiently large. The threshold values θ1, θ2 are predetermined threshold values which satisfy θ1<θ2.

Since the brake-OFF control and the accelerator-ON control are the same as in the first embodiment, detail description thereof is omitted.

Then, the steps from S1 to S8 shown above are repeated.

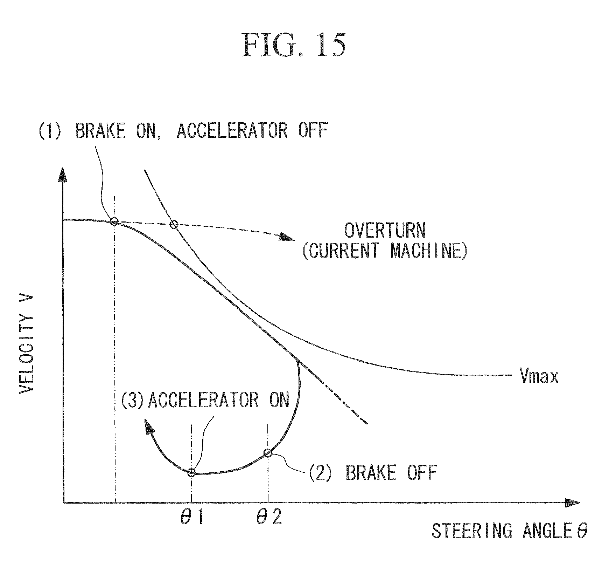

In this embodiment, as shown in Fig. 15, after having carried out the brake-ON accelerator-OFF control, the vehicle velocity is lowered and the vehicle velocity is restrained from exceeding the maximum allowable vehicle velocity Vmax. When the operator returns the steering and hence the radius of turn is sufficiently large, the brake is turned OFF and, when it becomes larger, the accelerator is turned ON, and the operation of the operator is restored.

As described above, according to the forklift and the method of controlling safety against overturning for a forklift in this embodiment, the turning of the vehicle while effectively preventing the overturning is enabled, and the minimized limit of operation of the operator is achieved, so that the workability is improved. In addition, in this embodiment, acceleration in a state in which the steering angle exceeds the threshold value is prohibited, and hence traveling with higher safety is enabled.

<Sixth Embodiment>

Subsequently, a sixth embodiment of the present invention will be described. The same components as the second embodiment are designated by the same reference numerals and description will be omitted.

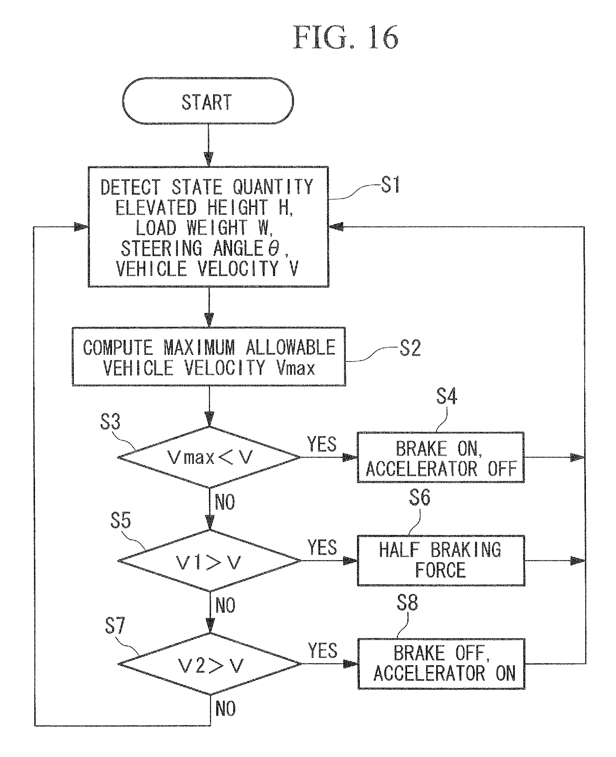

In this embodiment, the controller 20 carries out the overturning preventing control according to a flow shown in Fig. 16. The processes from Step S1 to Step S4 are the same as in the second embodiment, and hence description will be omitted.

In Step S5, whether or not the vehicle velocity V underruns the first stable vehicle velocity V1 is judged. When it underruns the first stable vehicle velocity V1, a control to half the braking force is carried out in Step S6. In other words, a state in which the brakes are completely applied is transferred to a state in which the braking force is halved. The adjustment is carried out by the controller 20 operating the adjustor 18h of the electromagnetic relief valve 18d. Subsequently, the process goes back to Step S1.

Then, whether or not the vehicle velocity V underruns the second stable vehicle velocity V2 is judged (Step S7). The second stable vehicle velocity V2 is a predetermined value which satisfies the condition V2<V1 as in the second embodiment. When the vehicle velocity underruns the second stable vehicle velocity V2, the brake-OFF accelerator-ON control is carried out in Step S8.

Since the brake-OFF accelerator-ON control is the same as in the first embodiment, detail description thereof is omitted.

Then, the steps from S1 to S8 shown above are repeated.

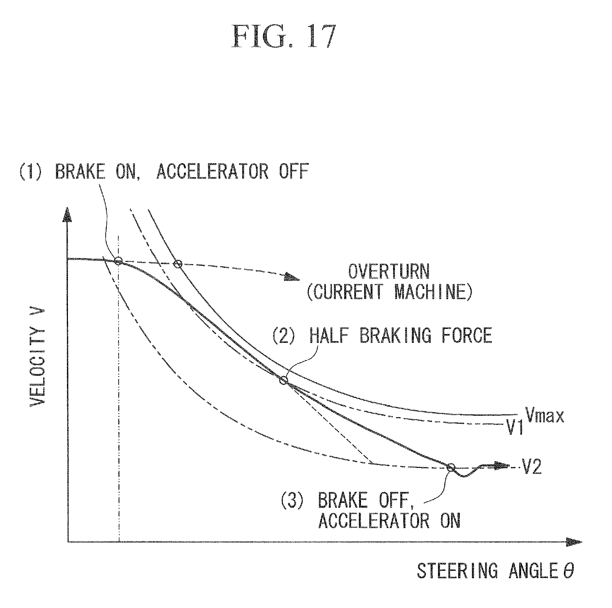

In this embodiment, as shown in Fig. 17, after having carried out the brake-ON accelerator-OFF control, the vehicle velocity is lowered and the vehicle velocity is restrained from exceeding the maximum allowable vehicle velocity Vmax. When the vehicle velocity is sufficient low and underruns the first stable vehicle velocity V1, the braking force is halved and, when the vehicle velocity underruns the second stable vehicle velocity, the brake is turned OFF and the accelerator is turned ON, and the operation of the operator is restored.

As described above, according to the forklift and the method of controlling safety against overturning for a forklift in this embodiment, the turning of the vehicle while effectively preventing the overturning is enabled, and the minimized limit of operation of the operator is achieved, so that the workability is improved. In addition, in this embodiment, the braking force is changed step-by-step, and smooth deceleration and transfer to the normal travel are achieved.

<Seventh Embodiment>

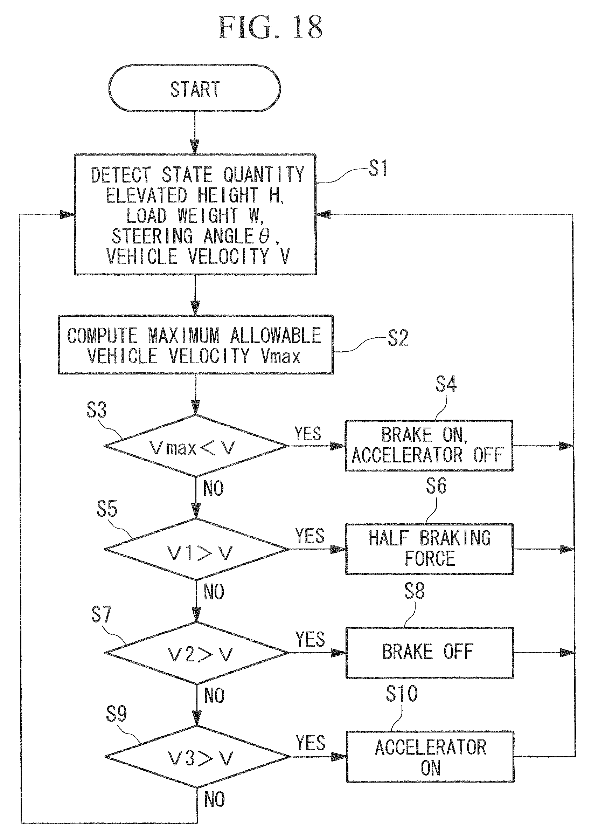

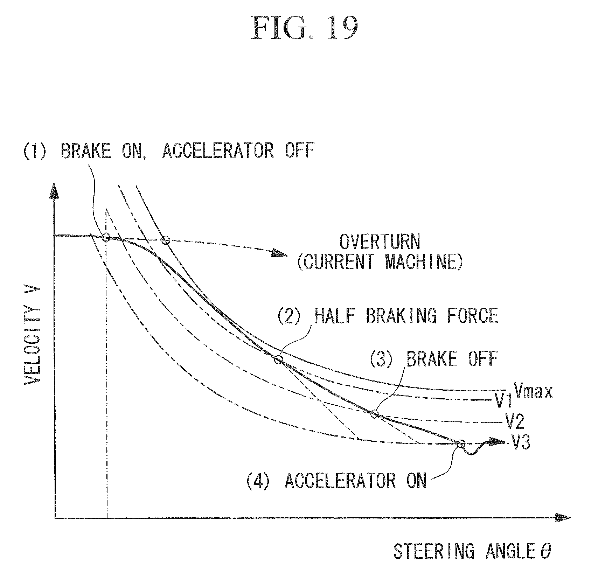

Subsequently, a seventh embodiment of the present invention will be described. The same components as the sixth embodiment are designated by the same reference numerals and description will be omitted.
In this embodiment, the controller 20 carries out the overturning preventing control according to a flow shown in Fig. 18. The processes from Step S1 to Step S7 are the same as in the sixth embodiment, and hence description will be omitted.
In Step S7, whether or not the vehicle velocity V underruns the second stable vehicle velocity V2 is judged and, when the vehicle velocity is judged to underrun the second stable vehicle velocity V2, the brake-OFF control is carried out in Step S8.
Subsequently, whether or not the vehicle velocity V underruns a third stable vehicle velocity V3 is judged (Step S9). The third stable vehicle velocity V3 is a predetermined value smaller than the value V2. When the vehicle velocity underruns the third stable vehicle velocity V3, the accelerator-ON control is carried out in Step S10.
Since the brake-OFF accelerator-ON control is the same as in the first embodiment, detail description thereof is omitted. Then, the steps from S1 to S10 shown above are repeated.
In this embodiment, as shown in Fig. 19, after having carried out the brake-ON accelerator-OFF control, the vehicle velocity is lowered and the vehicle velocity is restrained from exceeding the maximum allowable vehicle velocity Vmax. When the vehicle velocity is sufficient low and underruns the first stable vehicle velocity V1, the braking force is halved and, when the vehicle velocity underruns the second stable vehicle velocity, the brake is turned OFF. When the vehicle velocity further underruns the third stable vehicle velocity, the accelerator is turned ON, and the operation of the operator is restored.
As described above, according to the forklift and the method of controlling safety against overturning for a forklift in this embodiment, the turning of the vehicle while effectively preventing the overturning is enabled, and the minimized limit of operation of the operator is achieved, so that the workability is improved. In addition, in this embodiment, the braking force is changed step-by-step, and smooth deceleration is achieved and, furthermore, the timing of the release of the brakes and of the restoration of the accelerator is shifted, so that smooth transition to the normal travel is achieved.

<Eighth Embodiment>

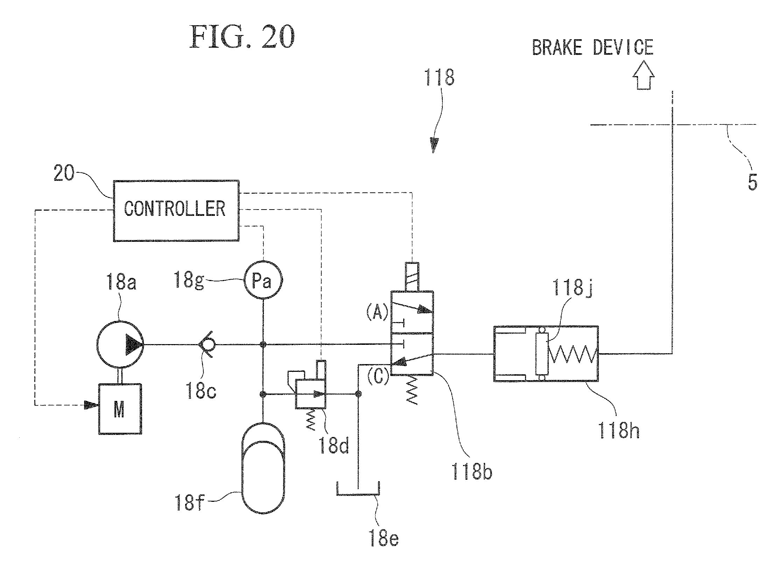

Subsequently, an eighth embodiment of the present invention will be described. In this embodiment, the brake control device 18 in the first embodiment is modified, and other components and the method of controlling are the same as the first embodiment and other embodiments described above, and hence description will be omitted.
The brake control device 118 in Fig. 20 is a device for feeding the hydraulic pressure generated by the hydraulic pump 18a having the motor to the brake device 5a via an electromagnetic valve 118b. The electromagnetic valve 118b is adapted to be switched to (A) a position to transmit the hydraulic pressure of the hydraulic pump 18a to the brake device 5a side and (C) a position to return the hydraulic pressure from the brake device 5a side.
When the electromagnetic valve 118b is at a position (A), the hydraulic pressure generated at the hydraulic pump 18a passes through the check valve 18c positioned at the location for the electromagnetic valve 118b. The hydraulic circuit is branched on the downstream side of the check valve 18c, one of those is provided to the electromagnetic valve 118b, and the other one passes through the electromagnetic relief valve 18d and returned to the reserve tank 18e. The accumulator 18f is provided on the upstream side of the electromagnetic relief valve 18d. A hydraulic cylinder 118h is provided on the downstream side of the electromagnetic valve 118b, and the hydraulic cylinder 118h has a piston 118j supported so as to be freely movable. The peripheral edge of the piston 118j is sealed so that the oil on the upstream side is not mixed with oil on the downstream side. Therefore, when the electromagnetic valve 118b is located at the position (A), the hydraulic pressure of the hydraulic pump 18a is applied to the hydraulic cylinder 118h, and only the pressure in question is applied to the brake device 5a on the downstream side.
When the electromagnetic valve 118b is located at the position (C), the hydraulic pressure applied to the electromagnetic valve 118b side of the hydraulic cylinder 118h is returned to the reserve tank 18e, and the hydraulic pressure applied to the brake device 5a is alleviated.
The hydraulic pump 18a, the electromagnetic valve 118b, the electromagnetic relief valve 18d and the hydraulic sensor 18g provided on the downstream side of the check valve 18c are controlled by the controller 20.
Since the configuration of the electromagnetic relief valve 18d is the same as that in the first embodiment, description will be omitted.
In this manner, according to the forklift in this embodiment, since edge-cutting is achieved by the hydraulic cylinder 118h, different types of oil may be used between the normal brake circuit and the additionally provided hydraulic system, so that the cost may be reduced.

<Ninth Embodiment>

Subsequently, a ninth embodiment of the present invention will be described. In this embodiment, the brake control device 18 in the first embodiment is modified, and other components and the method of controlling are the same as the first embodiment and other embodiments described above, and hence description will be omitted.

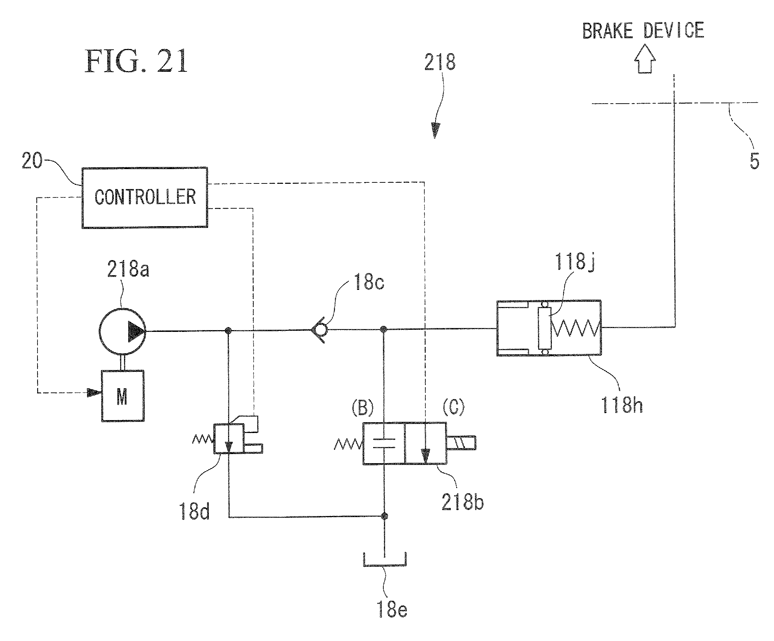

A brake control device 218 in Fig. 21 is a device for sending the hydraulic pressure generated by a hydraulic pump 218a having the motor to the brake device 5a. The hydraulic pump 218a and the motor used here have high response.

At the time of the brake ON control, the motor of the hydraulic pump 218a is activated by the controller 20, and acts on the brake device 5a via the check valve 18c and the hydraulic cylinder 118h. The hydraulic cylinder 118h includes a piston 118j supported so as to be freely movable. The peripheral edge of the piston 118j is sealed and hence oil on the upstream side is not mixed with oil on the downstream side. Therefore, when the hydraulic pressure is applied to the hydraulic cylinder 118h, the oil does not flow directly toward the downstream side, and only the pressure is applied to the brake device 5a on the downstream side.

A branch channel is provided between the check valve 18c and the hydraulic cylinder 118h, and the branch channel is provided with an electromagnetic valve 218b. The electromagnetic valve 218b is adapted to be switched to (B) a disconnected position and (C) a position to return the hydraulic pressure on the hydraulic cylinder 118h side to the reserve tank 18e. When the electromagnetic valve 218b is at the position (B), the hydraulic pressure generated by the hydraulic pump 218a is applied to the brake device 5a via the hydraulic cylinder 118h, and when the electromagnetic valve 218b is at the position (C), the hydraulic pressure applied to the electromagnetic valve 218b side of the hydraulic cylinder 118h is returned to the reserve tank 18e.

The branch channel provided with the electromagnetic relief valve 18d is provided between the hydraulic pump 218a and the check valve 18c so as to be connected to the reserve tank 18e. Since the structures of the electromagnetic relief valve 18d and the hydraulic cylinder 118h are the same as in the first and the eighth embodiments, description is omitted.

In this manner, according to the forklift in this embodiment, since the pressure is generated by activating the motor of the hydraulic pump 218a at the time of activation of the overturning preventing system, the accumulator and the three-port electromagnetic valve are not necessary, and hence the structure is simplified and the cost is reduced.

Since the edge-cutting is achieved by the hydraulic cylinder 118h, different types of oil may be used between the normal brake circuit and the additionally provided hydraulic system, so that the cost may be reduced.

<Tenth Embodiment>

Subsequently, the tenth embodiment of the present invention will be described. In this embodiment, the brake control device 218 in the ninth embodiment is modified, and other components and the method of controlling are the same as the ninth embodiment and other embodiments described above, and hence description will be omitted.

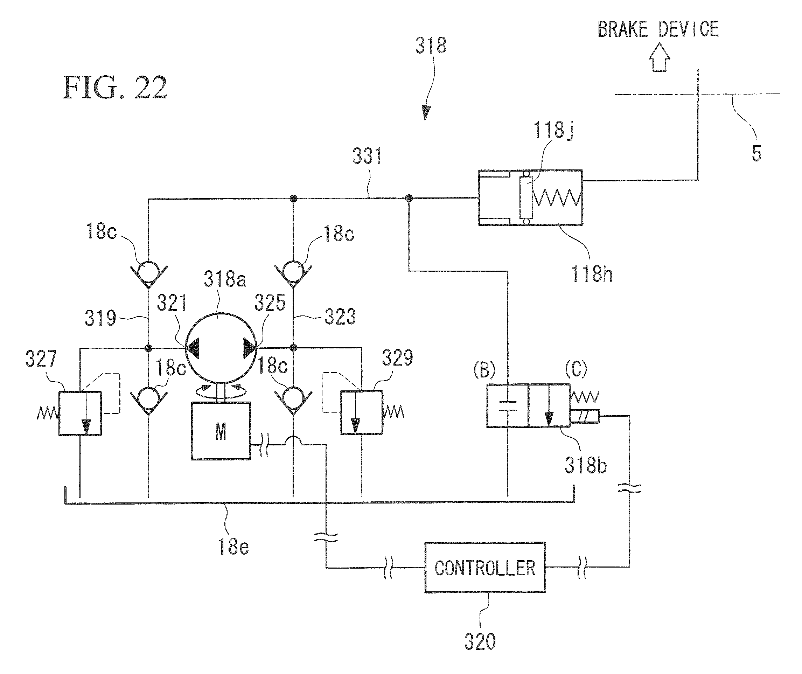

A brake control device 318 in Fig. 22 is a device for transmitting the high-pressure or the low-pressure hydraulic pressure generated by the brake control device 318 to the brake device 5a to activate the brake device 5a.

A hydraulic pump 318a and the motor employed here are able to rotate in the normal direction of rotation (one direction of rotation, hereinafter referred to as normal rotation) and the opposite direction of rotation (the other direction of rotation, hereinafter referred to as reverse rotation). When the hydraulic pump 318a and the motor are reversely rotated, oil at an elevated pressure is discharged from one opening 321 connected to a high-pressure piping 319. On the other hand, when the hydraulic pump 318a is normally rotated, oil at an elevated pressure is discharged from the other opening 325 connected to a low pressure piping 323.

The high-pressure piping 319 is a device to transmit the hydraulic pressure generated by the hydraulic pump 318a to the brake device 5a and the hydraulic cylinder 118h. The check valves 18c are arranged in the high-pressure piping 319 at two positions, and oil discharged from the hydraulic pump 318a is flowed into the section between the two check valves 18c. Connected to a position between the two check valves 18c in the high-pressure piping 319 is a high-pressure relief valve 327.

The high-pressure relief valve (first pressure adjustor) 327 is a valve for controlling the hydraulic pressure in the high-pressure piping 319 to a preset high pressure. When the hydraulic pressure in the high-pressure piping 319 is increased, the high-pressure relief valve 327 returns the oil in the high-pressure piping 319 to the reserve tank 18e, and thereby reducing the hydraulic pressure in the high-pressure piping 319 to the preset pressure.

The low pressure piping 323 is a device for transmitting the hydraulic pressure generated by the hydraulic pump 318a to the brake device 5a and the hydraulic cylinder 118h. The two check valves 18c are arranged in the low pressure piping 323 at two positions, and oil discharged from the hydraulic pump 318a is flowed into a section between the two check valves 18c. Connected to a position between the two check valves 18c in the low pressure piping 323 is a low-pressure relief valve 329.

The low-pressure relief valve (second pressure adjustor) 329 is a valve for controlling the hydraulic pressure in the low pressure piping 323 to a preset low pressure. When the hydraulic pressure in the low pressure piping 323 is increased, the low-pressure relief valve 329 returns the oil in the low pressure piping 323 to the reserve tank 18e, thereby reducing the hydraulic pressure in the low pressure piping 323 to the preset pressure.

An electromagnetic valve 318b is a valve adapted to be switched to (B) a position to block the communication between a cylinder piping 331 which transmits the hydraulic pressure to the brake device 5a and the hydraulic cylinder 118h and the reserve tank 18e (closed position) and (C) a position to communicate the cylinder piping 331 and the reserve tank 18e (opened position).

When the electromagnetic valve 318b is at the closed position, the oil discharged from the hydraulic pump 318a passes through the check valve 18c positioned at a location for the electromagnetic valve 318b. The hydraulic piping is branched on the downstream side of the check valve 18c, one of those is connected to the electromagnetic valve 318b, and the other one is connected to the hydraulic cylinder 118h. The hydraulic pressure generated by the hydraulic pump 318a is transmitted to the hydraulic cylinder 118h.

In contrast, when the electromagnetic valve 318b is at the opened position, oil discharged from the hydraulic pump 318a and oil in the hydraulic cylinder 118h pass through the electromagnetic valve 318b and are returned to the reserve tank 18e.

A controller 320 is a device to control the hydraulic pump 318a and the motor, and the electromagnetic valve 318b on the basis of the elevated height H, the load weight W, the velocity V and the steering angle θ.

The method of controlling with the controller 320 will be described in the description of the operation.

Here, the overturning preventing control by the controller 320 will be described in detail.

The controller 320 controls the braking force generated by the brake device 5a on the basis of the elevated height H, the load weight W, the velocity V and the steering angle θ obtained by calculating in the same manner as the first embodiment.

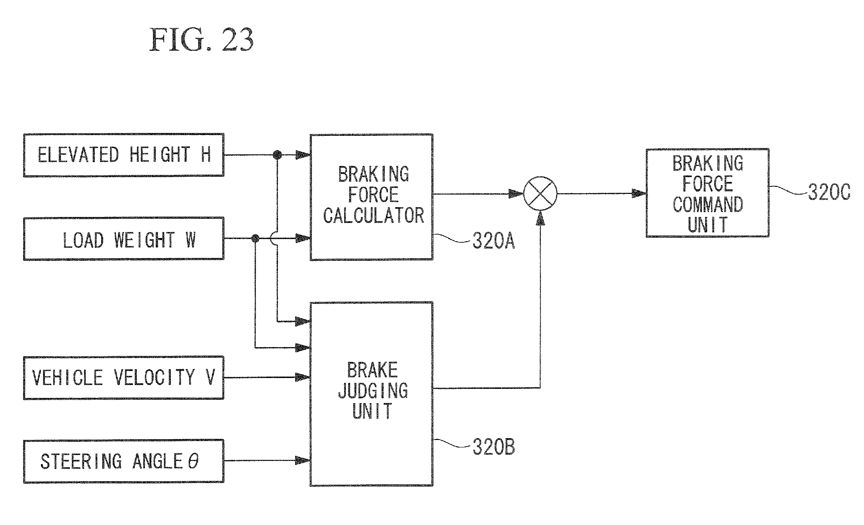

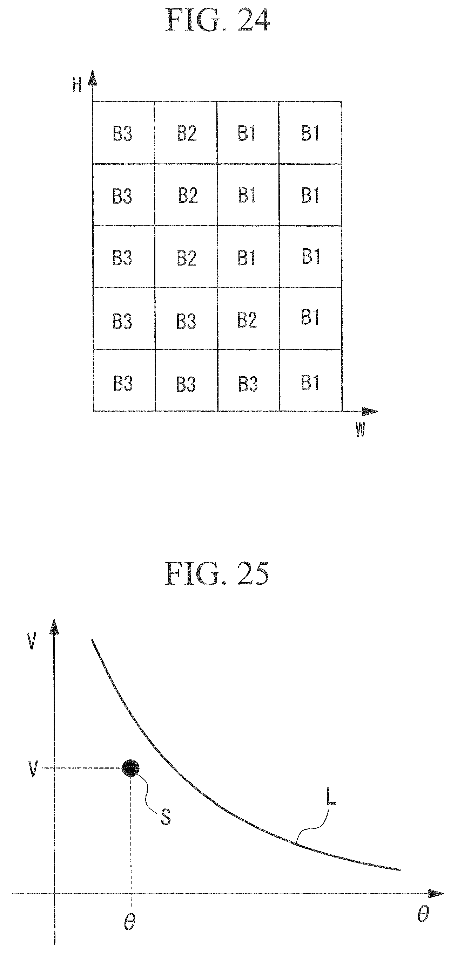

Fig. 23 is a block diagram for explaining the overturning preventing control by the controller shown in Fig. 22. Fig. 24 is a drawing for explaining a braking force map stored in a braking force calculator in Fig. 23.

The elevated height H and the load weight W entered into the controller 320 are entered into a braking force calculator 320A and a brake judging unit 320B as show in Fig. 23.

The braking force calculator 320A is a device for giving an instruction to switch the braking force command to be outputted to the brake device 5a on the basis of the braking force map (see Fig. 24). The braking force calculator 320A stores the braking force map shown in Fig. 24 in advance. The braking force calculator selects the braking force command to be outputted on the basis of the entered elevated height H and the load weight W.

More specifically, when the elevated height H is increased, the position of center of gravity of a forklift 301 is increased, and when the brakes are applied the likelihood of overturning of the forklift 301 is increased, so that the braking force command to be given is to make the brake device 5a to demonstrate a weak braking force. On the other hand, when the load weight W is increased, the likelihood of overturning of the forklift 301 when the brakes are applied is also increased, so that the braking force command to be given is to make the brake device 5a to demonstrate a weak braking force.

In Fig. 24, the reference sign B1 is a braking force command which causes a weakest braking force to be demonstrated, and the reference sign B3 is a braking force command which causes a strongest braking force to be demonstrated. The reference sign B2 is a braking force command to cause a braking force between B1 and B3 to be demonstrated.

Fig. 25 is a graph for explaining a method of judging by a brake judging unit in Fig. 23.

The elevated height H and the load weight W described above as well as the vehicle velocity V and the steering angle θ are entered into the brake judging unit 320B as shown in Fig. 23, and the brake judging unit 320B judges whether to output a braking force command to the brake device 5a (ON) or not (OFF) on the basis of these parameters and a diagram of overturn limit (see Fig. 25).

More specifically, as shown in the diagram of overturn limit in Fig. 25, a point S corresponding to the entered vehicle velocity V and the steering angle θ is plotted on a graph with the lateral axis representing the steering angle θ and the vertical axis representing the vehicle velocity V and, when the point S is located in an area on the side of the original point with respect to an overturn limit line L (left side in Fig. 25), the braking force command is not outputted (OFF). In contrast, when the point S is located on the right side of the overturn limit line L, the braking force command is outputted (ON). The overturn limit line L is a line defined on the basis of the elevated height H and the load weight W, and comes toward and away from the original point on the basis of the entered elevated height H and the load weight W.

As show in Fig. 23, the outputs from the braking force calculator 320A and the brake judging unit 320B are entered into a braking force command unit 320C, and the braking force command is outputted form the braking force command unit 320C to the brake device 5a.

In a table shown below, the contents of the braking force command outputted from the braking force command unit 320C are shown.

Table 1

| | OFF | ON | |
|---|---|---|---|
| | | B1 | B2 |
| hydraulic pump | stop | normal rotation | reverse rotation |
| electromagnetic valve | opened position | closed position | closed position |

When the brake judging unit 320B judges not to output the brake force command (OFF), the hydraulic pump 318a and the motor are stopped on the basis of the braking force command and the electromagnetic valve 318b is controlled to the opened position.

In this case, the oil in the hydraulic cylinder 118h is introduced into the reserve tank 18e via the cylinder piping 331 and the electromagnetic valve 318b, the hydraulic pressure in the hydraulic cylinder 118h is lowered.

In contrast, when the brake judging unit 320B judges to output the braking force command (ON), the following control is carried out.

When the braking force command is B1, the hydraulic pump 318a and the motor are driven to rotate in the normal direction on the basis of the braking force command, and the electromagnetic valve 318b is controlled to a closed position. The hydraulic pump 318a is driven to rotate in the normal direction and hence sucks the oil from the reserve tank 18e via the high-pressure piping 319, and discharges the oil with elevated pressure into the low pressure piping 323. At this time, the oil flows from the reserve tank 18e to the high-pressure piping 319, and passes through the check valve 18c and is sucked by the hydraulic pump 318a.

The hydraulic pressure in the low pressure piping 323 in which the oil is flowed from the hydraulic pump 318a is controlled to a preset low pressure by the low-pressure relief valve 329. The low hydraulic pressure is transferred from the low pressure piping 323 to the hydraulic cylinder 118h, and is transmitted to the brake device 5a via the hydraulic piston 118j.

The brake device 5a generates a braking force to a degree which does not cause the forklift 301 to overturn on the basis of the transmitted low hydraulic pressure.

At this time, the oil in the low pressure piping 323 is not returned to the reserve tank 18e by the check valve 18c arranged on the reserve tank 18e side of the low pressure piping 323. Furthermore, the oil in the low pressure piping 323 is not sucked by the hydraulic pump 318a by the check valve 18c arranged on the hydraulic cylinder 118h side of the high-pressure piping 319.

On the other hand, when the braking force command is B2, the hydraulic pump 318a and the motor are driven to rotate in the reverse direction on the basis of the braking force command, and the electromagnetic valve 318b is controlled to the opened position in the same manner as in the case described above.

The hydraulic pump 318a sucks the oil from the reserve tank 18e via the low pressure piping 323, and discharges the oil with elevated pressure into the high-pressure piping 319. At this time, the oil is flowed from the reserve tank 18e into the low pressure piping 323, and passes through the check valve 18c and is sucked into the hydraulic pump 318a.

The hydraulic pressure in the high-pressure piping 319 in which the oil is flowed from the hydraulic pump 318a is controlled to a preset low pressure by the high-pressure relief valve 327. The high hydraulic pressure is transmitted from the high-pressure piping 319 to the hydraulic cylinder 118h, and is transmitted to the brake device 5a via the hydraulic piston 118j.

The brake device 5a generates a braking force for damping the forklift 301 on the basis of the transmitted high hydraulic pressure.

At this time, the oil in the high-pressure piping 319 is not returned to the reserve tank 18e by the check valve 18c arranged on the reserve tank 18e side of the high-pressure piping 319. Furthermore, the oil in the high-pressure piping 319 is not sucked into the hydraulic pump 318a by the check valve 18c arranged on the hydraulic cylinder 118h side of the low pressure piping 323.

In this manner, according to the forklift 301 in this embodiment, the braking force to be applied to the wheel when the high hydraulic pressure adjusted by the high-pressure relief valve 327 is transmitted to the brake device 5a and the braking force to be applied to the wheel when the low hydraulic pressure adjusted by the low-pressure relief valve 329 is transmitted to the brake device 5a may be differentiated by switching the direction of rotation of the hydraulic pump 318a.

Therefore, when the likelihood of overturning of the forklift 301 is high, a relatively weak braking force is applied to the wheel to prevent the forklift 301 from overturning and, when the likelihood of overturning of the forklift 301 is low, a relatively strong braking force is applied to the wheel so that lowering of the damping force is prevented.

The controller 320 may control the hydraulic pump 318a and the motor, and the electromagnetic valve 318b on the basis of the three parameters of elevated height H, the load weight W and the velocity V as described above, or may control on the basis of only two or one of these parameters, or may control on the basis of the combination with other parameters. The parameters are not specifically limited.

<Eleventh Embodiment>

Subsequently, the eleventh embodiment of the present invention will be described. In this embodiment, the brake control device 318 in the tenth embodiment is modified, and other components and the method of controlling are the same as the tenth embodiment and other embodiments described above, and hence description will be omitted.

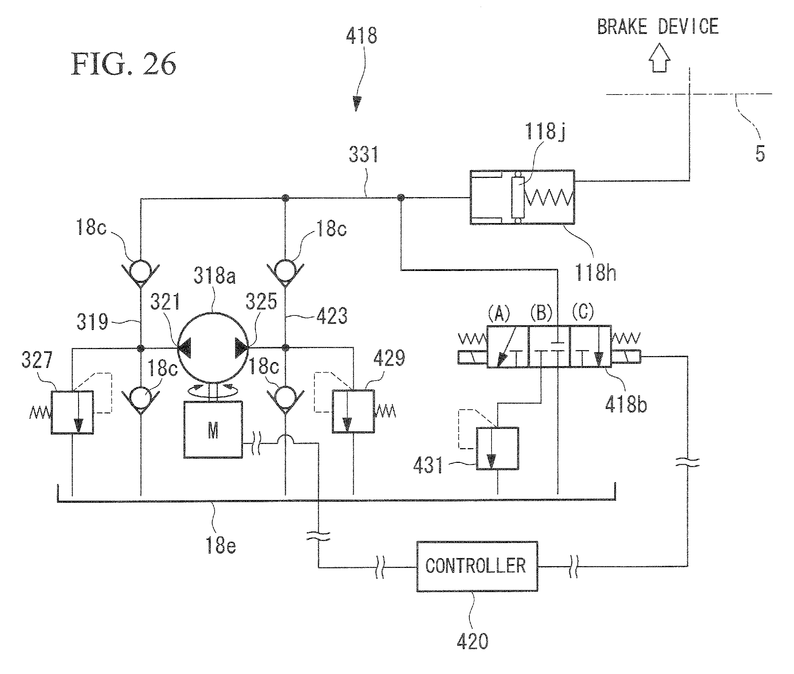

A brake control device 418 in Fig. 26 is a device for transmitting a hydraulic pressure at any one of the high pressure, the intermediate pressure and the low pressure generated by the brake control device 418 to the brake device 5a to activate the brake device 5a.

The hydraulic pump 318a and the motor employed here are able to rotate in the normal direction and the reverse direction. When the hydraulic pump 318a and the motor are reversely rotated, oil at an elevated pressure is discharged from one opening 321 connected to the high-pressure piping 319. On the other hand, when the hydraulic pump 318a is normally rotated, oil at an elevated pressure is discharged from the other opening 325 connected to an intermediate-pressure piping 423.

The intermediate-pressure piping 423 is a device to transmit the hydraulic pressure generated by the hydraulic pump 318a to the brake device 5a and the hydraulic cylinder 118h. The check valves 18c are arranged in the intermediate-pressure piping 423 at two positions, and oil discharged from the hydraulic pump 318a is flowed into the section between the two check valves 18c. Connected to a position between the two check valves 18c in the intermediate-pressure piping 423 is an intermediate-pressure relief valve 429.

The intermediate-pressure relief valve (second pressure adjustor) 429 is a valve for controlling the hydraulic pressure in the intermediate-pressure piping 423 to a preset intermediate pressure. When the hydraulic pressure in the intermediate-pressure piping 423 is increased, the intermediate-pressure relief valve 429 returns the oil in the intermediate-pressure piping 423 to the reserve tank 18e, and thereby reducing the hydraulic pressure in the intermediate-pressure piping 423 to the preset pressure.

An electromagnetic valve (valve element) 418b is a valve adapted to be switched to (A) a position to communicate the cylinder piping 331 and a low-pressure relief valve 431 (valve communicated position), (B) a position to block the cylinder piping 331 and the reserve tank 18e (closed position), and (C) a position to communicate the cylinder piping 331 and the reserve tank 18e (tank communicating position).

When the electromagnetic valve 418b is at the position (A), oil discharged form the hydraulic pump 318a passes through the check valve 18c positioned at a location for the electromagnetic valve 418b. The hydraulic piping is branched on the downstream side of the check valve 18c, one of those is connected to the electromagnetic valve 418b, and the other one is connected to the hydraulic cylinder 118h. The oil discharged from the hydraulic pump 318a and part of the oil in the hydraulic cylinder 118h is returned to the reserve tank 18e through the electromagnetic valve 418b and the low-pressure relief valve 431.

The flow of oil when the electromagnetic valve 418b is at the closed position (B) and the opened position (C) is the same as in the tenth embodiment, and hence description thereof is omitted.

The low-pressure relief valve (third pressure adjustor) 431 is a valve for controlling the hydraulic pressure in the cylinder piping 331 to a preset low pressure. When the hydraulic pressure in the cylinder piping 331 is increased, the low-pressure relief valve 431 returns the oil in the cylinder piping 331 to the reserve tank 18e, and the hydraulic pressure in the cylinder piping 331 is lowered to a preset pressure.

A controller 420 is a device to control the hydraulic pump 318a and the motor, and the electromagnetic valve 418b on the basis of the elevated height H, the load weight W, the velocity V and the steering angle θ.

The method of controlling with the controller 420 will be described in the description of the operation given below.

Here, the overturning preventing control by the controller 420 will be described in detail.

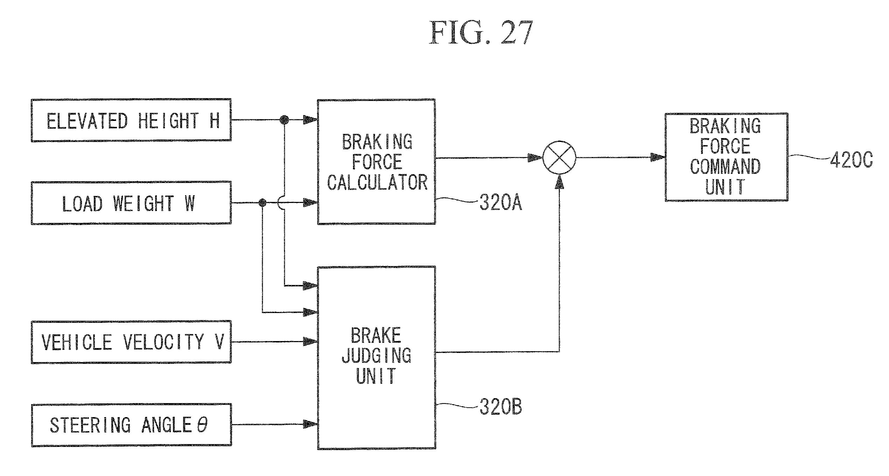

Fig. 27 is a block diagram for explaining the overturning preventing control by the controller in Fig. 26.

Generation of the braking command by the controller 420 via the braking force calculator 320A and the brake judging unit 320B is carried out on the basis of the elevated height H, the load weight W, the velocity V, the steering angle θ, the braking force map (see Fig. 24) and the diagram of overturn limit as in the tenth embodiment, and hence the description will be omitted.

The outputs from the braking force calculator 320A and the brake judging unit 320B are entered into a braking force command unit 420C, and the braking force command is outputted from the braking force command unit 420C to the brake device 5a.

In a table shown below, the contents of the braking force command outputted from the braking force command unit 420C are shown.

Table 2

| | OFF | ON | | |
| --- | --- | --- | --- | --- |
| | | B1 | B2 | B3 |
| hydraulic pump | stop | normal rotation | normal rotation | reverse rotation |
| electromagnetic valve | tank communicating position | valve communicating position | closed position | closed position |

When the brake judging unit 320B judges not to output the braking force command (OFF), the hydraulic pump 318a and the motor are stopped on the basis of the braking force command, and the electromagnetic valve 418b is controlled to the tank communicating position.
In this case, since the oil in the hydraulic cylinder 118h is introduced into the reserve tank 18e via the cylinder piping 331 and the electromagnetic valve 418b, the hydraulic pressure in the hydraulic cylinder 118h is lowered.
In contrast, when the brake judging unit 320B judges to output the braking force command (ON), the following control is carried out.
When the braking force command is B1, the hydraulic pump 318a and the motor are driven to rotate in the normal direction on the basis of the braking force command, and the electromagnetic valve 418b is controlled to the valve communicating position.
The hydraulic pump 318a is driven to rotate in the normal direction and hence sucks the oil from the reserve tank 18e via the high-pressure piping 319, and the oil at the elevated pressure is discharged to the intermediate-pressure piping 423. At this time, the oil flows from the reserve tank 18e into the high-pressure piping 319, passes though the check valve 18c and is sucked by the hydraulic pump 318a.
The oil in the intermediate-pressure piping 423 to which the oil is flowed from the hydraulic pump 318a is flowed from the cylinder piping 331 to the hydraulic cylinder 118h via the cylinder piping 331, and is flowed into the low-pressure relief valve 431 via the electromagnetic valve 418b.
The hydraulic pressure in the hydraulic cylinder 118h is controlled to a preset low pressure by the low-pressure relief valve 431. The brake device 5a generates a braking force for damping the forklift 401 on the basis of the low hydraulic pressure transmitted via the hydraulic piston 118j.
On the other hand, when the braking force command is B2, the hydraulic pump 318a and the motor are driven to rotate in the normal direction on the basis of the braking force command, and the electromagnetic valve 418b is controlled to a closed position.
The hydraulic pump 318a is driven to rotate in the normal direction and hence sucks oil from the reserve tank 18e via the high-pressure piping 319 and discharges the oil with elevated pressure into the intermediate-pressure piping 423. At this time, the oil flows from the reserve tank 18e into the high-pressure piping 319, passes through the check valve 18c and is sucked by the hydraulic pump 318a.
The oil pressure in the intermediate-pressure piping 423 to which the oil with an elevated pressure is flowed is controlled to a preset intermediate pressure by the intermediate-pressure relief valve 429. The hydraulic pressure at the intermediate pressure is transmitted from the intermediate-pressure piping 423 to the hydraulic cylinder 118h, and is transmitted to the brake device 5a via the hydraulic piston 118j.
The brake device 5a generates a braking force for damping the forklift 401 on the basis of the transmitted intermediate hydraulic pressure.
When the braking force command is B3, the hydraulic pump 318a and the motor are driven to rotate in the reverse direction on the basis of the braking force command, and the electromagnetic valve 418b is controlled to a closed position.
The operation of the brake control device 418 from then on is the same as the brake control device 318 in the tenth embodiment, and hence description will be omitted.
As described above, according to the forklift 401 in this embodiment, the low hydraulic pressure adjusted by the low-pressure relief valve 431 is transmitted to the brake device 5a by causing the oil to flow into the low-pressure relief valve 431, so that a braking force different from the braking force applied to the wheel when the high or intermediate hydraulic pressure adjusted by the high-pressure relief valve 327 or the intermediate-pressure relief valve 429 is transmitted to the brake device 5a is applied to the wheel. Therefore, finer control of the braking force to be applied to the wheel is enabled in comparison with the method in which the hydraulic pressure to be transmitted to the brake device 5a is adjusted into two stages of high pressure and low pressure, so that the forklift 401 is prevented from overturning and lowering of the damping force is prevented.

<Twelfth Embodiment>

Subsequently, the twelfth embodiment of the present invention will be described. In this embodiment, the brake control device 218 in the ninth embodiment is modified, and other components and the method of controlling are the same as the ninth embodiment and other embodiments described above, and hence description will be omitted.

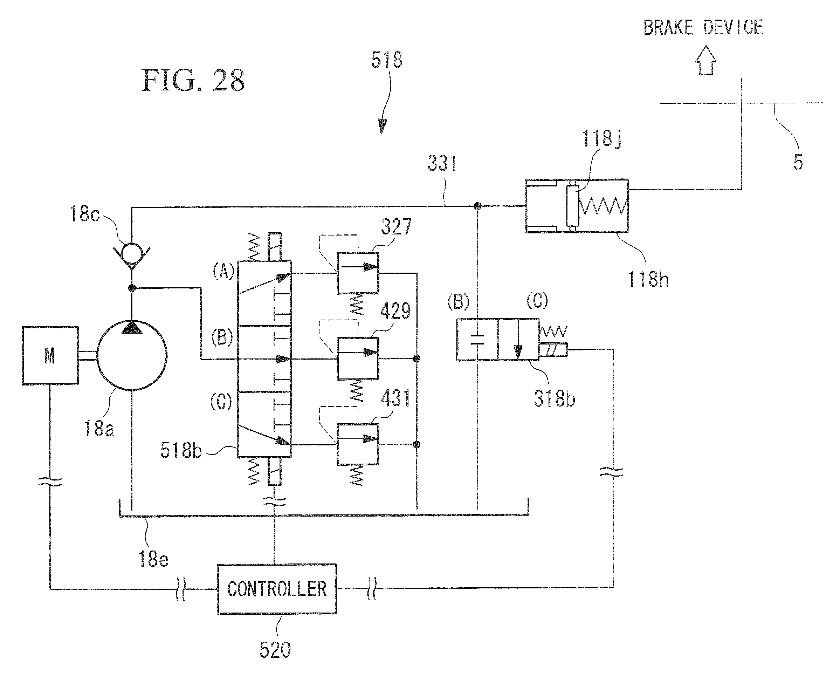

A brake control device 518 in Fig. 28 is a device for transmitting a hydraulic pressure at any one of the high pressure, the intermediate pressure and the low pressure generated by the brake control device 518 to the brake device 5a to activate the brake device 5a.

A four-way valve (branching valve) 518b as an electromagnetic valve is a valve connected to the cylinder piping 331 which transmits the hydraulic pressure to the brake device 5a and the hydraulic cylinder 118h and adapted to be switched to (A) a position to communicate the cylinder piping 331 and the high-pressure relief valve 327 (high-pressure position), (B) a position to block the cylinder piping 331 and the intermediate-pressure relief valve 429 (intermediate-pressure position) and (C) a position to communicate the cylinder piping 331 and the low-pressure relief valve 431 (low-pressure position).

A controller 520 is a device for controlling the hydraulic pump 18a and the motor, the electromagnetic valve 318b and the four-way valve 518b on the basis of the elevated height H, the load weight W, the velocity V and the steering angle θ.

The method of controlling with the controller 520 will be described in the description of the operation given below.

Here, the overturning preventing control by the controller 520 will be described in detail.

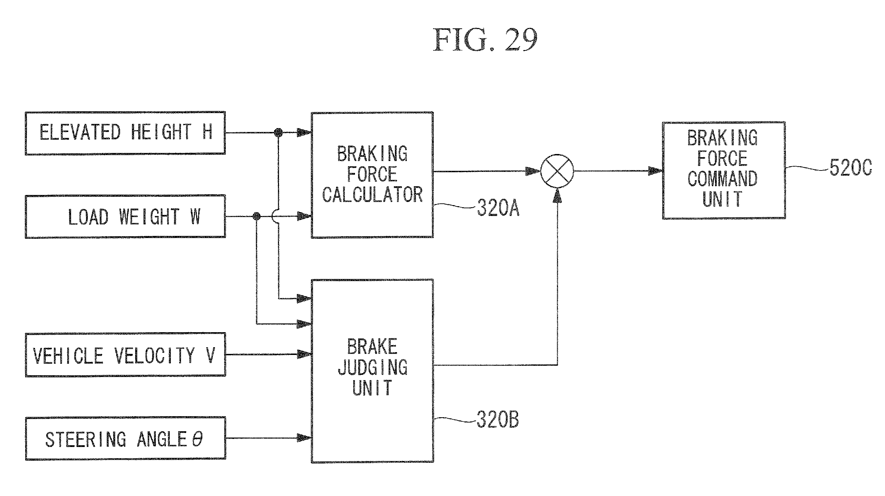

Fig. 29 is a block diagram for explaining the overturning preventing control by the controller in Fig. 28.

Generation of the braking command by the controller 520 via the braking force calculator 320A and the brake judging unit 320B is carried out on the basis of the elevated height H, the load weight W, the velocity V, the steering angle θ, the braking force map (see Fig. 24) and the diagram of overturn limit as in the tenth embodiment, and hence the description will be omitted.

The outputs from the braking force calculator 320A and the brake judging unit 320B are entered into a braking force command unit 520C, and the braking force command is outputted from the braking force command unit 520C to the brake device 5a.

In a table shown below, the contents of the braking force command outputted from the braking force command unit 520C are shown.

Table 3

| | OFF | ON | | |
| --- | --- | --- | --- | --- |
| | | B1 | B2 | B3 |
| electromagnetic valve | opened position | closed position | closed position | closed position |
| four-way valve | low-pressure position | low-pressure position | intermediate-pressure position | high-pressure position |

When the brake judging unit 320B judges not to output the braking force command (OFF), the hydraulic pump 18a and the motor are stopped on the basis of the braking force command, and the electromagnetic valve 318b is controlled to the opened position, and the four-way valve 518b is controlled to the low-pressure position.

In this case, since the oil in the hydraulic cylinder 118h is introduced into the reserve tank 18e via the cylinder piping 331 and the electromagnetic valve 318b, the hydraulic pressure in the hydraulic cylinder 118h is lowered.

When the brake judging unit 320B judges to output the braking force command (ON), the hydraulic pump 18a and the motor are driven irrespective of the braking force commands shown below.

In contrast, the electromagnetic valve 318b and the four-way valve 518b are controlled as follows on the basis of the respective braking force commands.

When the braking force command is B1, the electromagnetic valve 318b is controlled to the closed position and the four-way valve 518b is controlled to the low-pressure position on the basis of the braking force command.

The hydraulic pump 18a sucks the oil from the reserve tank 18e, and discharges the oil with the elevated pressure to the cylinder piping 331. The oil with the elevated pressure is flowed into the hydraulic cylinder 118h via the cylinder piping 331, and is flowed into the low-pressure relief valve 431 via the four-way valve 518b.

The hydraulic pressure in the hydraulic cylinder 118h is controlled to a preset low pressure by the low-pressure relief valve 431. The brake device 5a generates a braking force which damps a forklift 501 on the basis of the low hydraulic pressure transmitted via the hydraulic piston 118j.

When the braking force command is B2, the electromagnetic valve 318b is controlled to a closed position, and the four-way valve 518b is controlled to the intermediate-pressure position on the basis of the braking force command. The oil elevated in pressure by the hydraulic pump 218a flows into the hydraulic cylinder 118h via the cylinder piping 331, and flows into the intermediate-pressure relief valve 429 via the four-way valve 518b. The hydraulic pressure in the hydraulic cylinder 118h is controlled to an intermediate pressure preset by the intermediate-pressure relief valve 429. The brake device 5a generates a braking force for damping the forklift 501 on the basis of the intermediate hydraulic pressure transmitted via the hydraulic piston 118j.

When the braking force command is B3, the electromagnetic valve 318b is controlled to the closed position and the four-way valve 518b is controlled to the high-pressure position on the basis of the braking force command. The oil elevated in pressure by the hydraulic pump 218a flows into the hydraulic cylinder 118h via the cylinder piping 331, and flows into the high-pressure relief valve 327 via the four-way valve 518b. The hydraulic pressure in the hydraulic cylinder 118h is controlled to a high-pressure preset by the high-pressure relief valve 327. The brake device 5a generates a braking force for damping the forklift 501 on the basis of the high hydraulic pressure transmitted via the hydraulic piston 118j.

In this manner, according to the forklift 501 in this embodiment, by selecting a relief valve which introduces oil by the four-way valve 518b, the hydraulic pressure at any of the high pressure, the intermediate pressure or the low pressure corresponding to the selected relief valve is transmitted to the brake device 5a. Therefore, finer control of the braking force to be applied to the wheel is enabled, so that the forklift 501 is prevented from overturning and lowering of the damping force is prevented.

<Thirteenth Embodiment>

Subsequently, the thirteenth embodiment of the present invention will be described. In this embodiment, the brake 5 in the ninth embodiment is modified, and other components and the method of controlling are the same as the ninth embodiment and other embodiments described above, and hence description will be omitted.

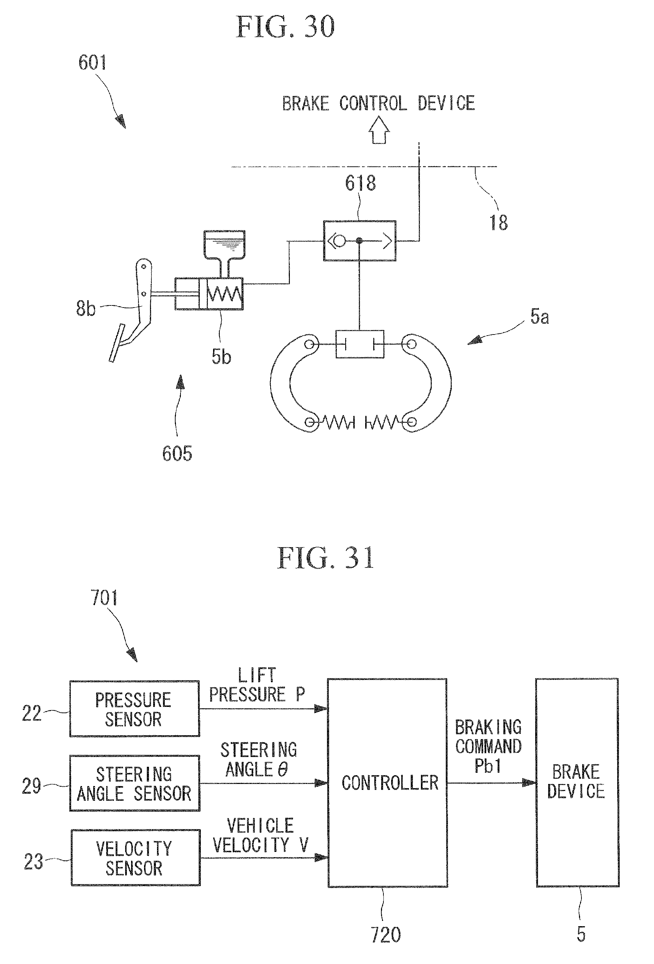

As shown in Fig. 30, a brake 605 of a forklift 601 includes the brake device 5a having a brake disk and a caliper for pressing the friction member against the brake disk, a brake pedal (brake operating unit) 8b, a master cylinder (brake operating unit) 5b for converting an operating force applied to the brake pedal 8b into a hydraulic pressure and send the same to the brake device 5a and a shuttle valve (selector valve) 618. The shuttle valve 618 is a vale for transmitting a hydraulic pressure having a higher pressure from between the hydraulic pressure transmitted from the master cylinder 5b and the hydraulic pressure transmitted from the brake control device 18.

In this manner, according to the forklift 601 in this embodiment, since the shuttle valve 618 is provided, the oil for transmitting the hydraulic pressure from the master cylinder 5b to the brake device 5a is prevented from flowing into the brake device 5a or the brake control device 18. Therefore, the oil in the master cylinder 5b is prevented from running short. With the provision of the shuttle valve 618, the brake control device 18 generates a higher hydraulic pressure than the hydraulic pressure transmitted from the master cylinder 5b even while the driver operates the brake pedal 8b and applying the braking force to the wheel, so that the braking force on the basis of the hydraulic pressure of the brake device 5a is applied to the wheel.

<Fourteenth Embodiment>

Subsequently, the fourteenth embodiment of the present invention will be described. In this embodiment, the method of controlling by the controller 20 in the first embodiment is modified, and other components and the method of controlling are the same as the first embodiment and other embodiments described above, and hence description will be omitted.

Fig. 31 is a block diagram for explaining the method of controlling in this embodiment. As shown in Fig. 31, a controller 720 of a forklift 701 has a pressure P in the lift cylinder detected by the pressure sensor 22, the steering angle θ detected by the steering angle sensor 29 and the velocity V detected by the velocity sensor 23 entered therein. The corrected brake command Pb1 is outputted from the controller 720 to the brake device 5a.

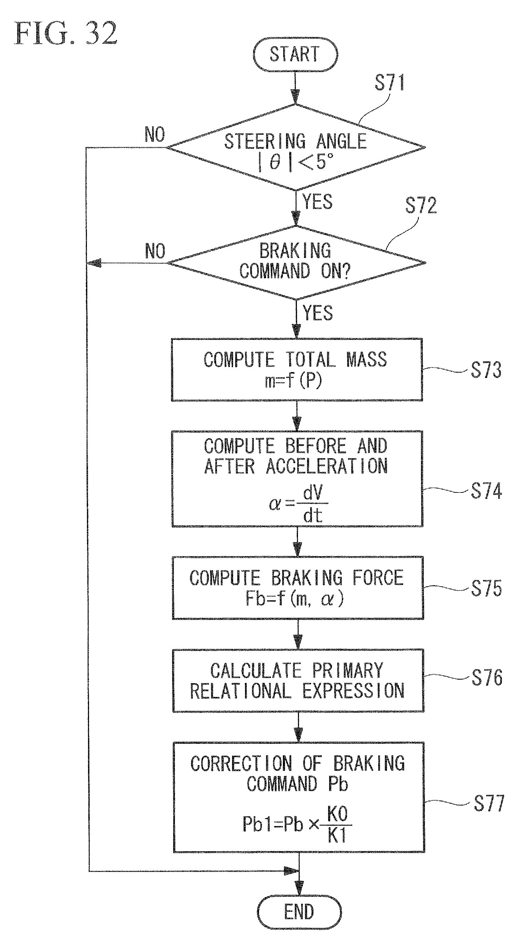

Subsequently, the overturning preventing control by the controller 720 will be described in detail. The controller 720 carries out the overturning preventing control according to the flowchart shown in Fig. 32. The controller 720 judges whether the absolute value of the steering angle θ entered by the steering angle sensor 29 is smaller than 5° or not (Step S71). When the absolute value of the steering angle θ is 5° or larger, the controller 720 finishes this control flow.

When the absolute value of the steering angle θ is smaller than 5°, the controller 720 judges whether a brake command is entered by the driver or not (Step S72). When the braking command from the driver is not entered, the controller 720 finishes this control flow.

When the braking command from the driver is entered, the controller 720 computes and obtains a total mass m of the forklift 701 (Step S73).

The controller 720 calculates the mass of the load lifted by the fork 13 on the basis of the pressure P in the lift cylinder, and obtains the total mass m of the forklift 701 on the basis of the own weight of the forklift 701 stored in advance.

When the total mass m is calculated, the controller 720 calculates a before and after acceleration (deceleration information) $\alpha$ by differentiating the velocity V by time (Step S74).

Then, the controller 720 calculates a braking force Fb on the basis of the calculated total mass m and the before and after acceleration $\alpha$ (Step S75).

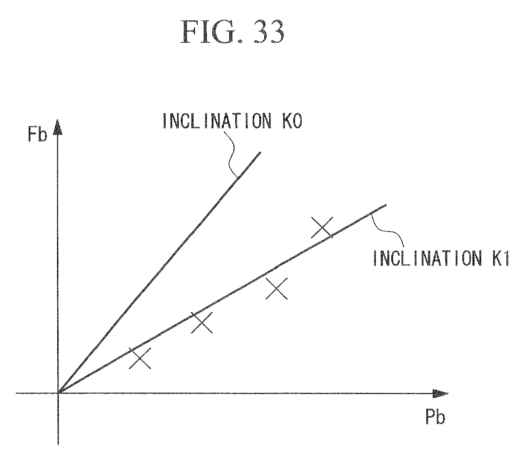

The controller 720 obtains an inclination K1 of primary relational expression shown in Fig. 33 on the basis of the plurality of braking forces Fb obtained in this manner and a brake signal (deceleration instruction value) Pb entered by the driver (Step S76).

When the inclination K1 of primary relation expression is calculated, the controller 720 carries out computation to correct the braking command Pb on the basis of a inclination K0 of primary relational expression stored in advance and the inclination K1 of primary relational expression (Step S77).

More specifically, the braking command Pb1 corrected from the braking command Pb is calculated on the basis of the expression (1).

$$Pb1 = (K0/K1)Pb \quad (1)$$

The corrected signal Pb1 thus calculated is entered from the controller 720 to the brake control device 18. Since the operation of the brake control device 18 from then on is the same as the first embodiment and other respective embodiments described above, description will be omitted.

In this manner, according to the forklift 701 in this embodiment, by controlling the hydraulic pump 18a on the basis of the corrected signal Pb1, the relation between the brake signal Pb entered by the driver and the damping force applied to the forklift 701 is maintained constant.

Therefore, even when the braking force applied to the wheel is reduced even though the same hydraulic pressure is transmitted due to the deterioration of the brake disk in the brake device, the corrected signal Pb1 applied with correction to compensate the reduced braking force is outputted to the brake control device 18, so that the same braking force is demonstrated.

**Claims**

1. A forklift comprising a controller for controlling the traveling state of a vehicle,
   wherein the controller estimates the traveling state at a predetermined time ahead and, when the vehicle velocity at that time exceeds a maximum allowable vehicle velocity before generating a likelihood of overturning, applies the brakes and, when a no-overturning state is achieved thereafter, releases the brakes.

2. The forklift according to Claim 1, wherein the controller judges whether or not the no-overturning state is achieved on the basis of the vehicle velocity.

3. The forklift according to Claim 1 or 2, wherein the controller judges whether or not the no-overturning state is achieved on the basis of the steering angle of the vehicle.

4. The forklift according to any one of Claims 1 to 3, wherein the controller calculates the maximum allowable vehicle velocity on the basis of the steering angle of the vehicle, the elevated height of a lift and the load.

5. The forklift according to any one of Claims 1 to 4, wherein the controller applies the brakes and, simultaneously, switches the accelerator off, and restores the accelerator in association with the release of the brakes.

6. The forklift according to any one of Claims 1 to 4, wherein the controller applies the brakes and, simultaneously, switches the accelerator off, and restores the accelerator after the brakes are released.

7. The forklift according to any one of Claims 1 to 6, wherein the controller releases the brakes gradually according to the state of the vehicle.

8.  The forklift according to any one of Claims 1 to 7 comprising a brake control device, the brake control device including:

    a brake device for applying the brakes to the wheels by a hydraulic pressure;
    a hydraulic pump for delivering the hydraulic pressure to the brake device side;
    a valve element configured to control the flow of the hydraulic pressure,

    wherein the controller carries out the brake control of the vehicle by controlling the valve element.

9.  The forklift according to Claim 8, wherein a hydraulic cylinder for transmitting the hydraulic pressure by edge-cutting oil is interposed between the valve element and the brake device.

10. The forklift according to Claim 8 or 9, wherein the hydraulic pump is a pump for switching a function to intake oil from one opening and discharge the oil from the other opening to the brake device side, or to intake oil from the other opening and discharge the oil from the one opening to the brake device side by switching the direction of rotation, the hydraulic pump includes:

    a first pressure adjustor for adjusting the pressure of the oil discharged from the one opening; and
    a second pressure adjustor for adjusting the pressure of the oil discharged from the other opening, and

    wherein a pressure adjusted by the first pressure adjustor and a pressure adjusted by the second pressure adjustor are different from each other.

11. The forklift according to Claim 10 comprising a third pressure adjustor for adjusting the pressure of oil discharged from the first opening and the second opening,
    wherein the valve element controls flowing-in of the oil into the third pressure adjustor, and
    wherein the pressure adjusted by the third pressure adjustor is different from the pressure adjusted by the first pressure adjustor and the second pressure adjustor.

12. The forklift according to Claim 8 or 9 comprising:

    a plurality of pressure adjustors for adjusting the hydraulic pressure transmitted to the brake device to different pressures respectively; and
    a branching valve for introducing at least part of the oil delivered from the hydraulic pump to any of the plurality of pressure adjustors.

13. The forklift according to any one of Claims 8 to 12 comprising:

    a brake operating unit which generates a hydraulic pressure on the basis of the instruction of the driver and transmits the generated hydraulic pressure to the brake device; and
    a selector valve for transmitting only the higher hydraulic pressures from between the hydraulic pressure transmitted from the hydraulic pump and the hydraulic pressure transmitted from the brake operating unit to the brake device.

14. The forklift according to any one of Claims 8 to 13, wherein the controller controls the hydraulic pump when applying the brakes to apply the hydraulic pressure to the brake device side.

15. The forklift according to Claim 14, wherein the controller corrects a deceleration instruction value on the basis of the relation between the deceleration instruction value entered by the driver and the deceleration information on the basis of the velocity change, and controls the hydraulic pump on the basis of the deceleration instruction value after correction.

16. A method of controlling safety against overturning for a forklift, comprising the steps of:

    estimating the traveling state at a predetermined time ahead;
    applying the brakes when the vehicle velocity at that time exceeds a maximum allowable vehicle velocity before generating a likelihood of overturning; and
    releasing the brakes when a no-overturning state is achieved thereafter.

FIG. 1

## FIG. 2

FIG. 3

# FIG. 4

FEEDING SIDE

18h

18d

18e

# FIG. 5

START

DETECT STATE QUANTITY
ELEVATED HEIGHT H,
LOAD WEIGHT W,
STEERING ANGLE $\theta$,
VEHICLE VELOCITY V — S1

COMPUTE MAXIMUM ALLOWABLE
VEHICLE VELOCITY Vmax — S2

S3  Vmax < V

YES → S4  BRAKE ON, ACCELERATOR OFF

NO

S5  V1 > V

YES → S6  BRAKE OFF, ACCELERATOR ON

NO

## FIG. 6

CURRENT STATE

(1) BRAKE ON, ACCELERATOR OFF

ESTIMATED VALUE AFTER
TIME T HAS ELAPSED

OVERTURN (CURRENT MACHINE)

VELOCITY V

Vmax

V1

(2) BRAKE OFF, ACCELERATOR ON

STEERING ANGLE θ

## FIG. 7

ESTIMATED VALUE AFTER
TIME T HAS ELAPSED

STEERING ANGLE θ

CURRENT
VALUE

VALUE IN
THE PAST

TIME

ΔT  T

# FIG. 8

```
                    ┌──────────┐
                    │  START   │
                    └────┬─────┘
                         │
                         ▼
        ┌────────────────────────────────┐
        │  DETECT STATE QUANTITY          │──── S1
        │  ELEVATED HEIGHT H,             │
        │  LOAD WEIGHT W,                 │
        │  STEERING ANGLE θ,              │
        │  VEHICLE VELOCITY V             │
        └────────────────┬───────────────┘
                         │
                         ▼
        ┌────────────────────────────────┐
        │  COMPUTE MAXIMUM ALLOWABLE      │──── S2
        │  VEHICLE VELOCITY Vmax          │
        └────────────────┬───────────────┘
                         │
              S3         ▼              S4
              ◇ Vmax < V ◇ ──YES──> ┌──────────────────┐
                         │          │  BRAKE ON,        │
                        NO          │  ACCELERATOR OFF  │
                         │          └──────────────────┘
              S5         ▼              S6
              ◇  V1 > V  ◇ ──YES──> ┌──────────────────┐
                         │          │   BRAKE OFF       │
                        NO          └──────────────────┘
                         │
              S7         ▼              S8
              ◇  V2 > V  ◇ ──YES──> ┌──────────────────┐
                         │          │   ACCELERATOR     │
                        NO          │   ON              │
                                    └──────────────────┘
```

# FIG. 9

(1) BRAKE ON, ACCELERATOR OFF

OVERTURN (CURRENT MACHINE)

VELOCITY V

Vmax

V1

V2

(2) BRAKE OFF

(3) ACCELERATOR ON

STEERING ANGLE θ

# FIG. 10

START

DETECT STATE QUANTITY
ELEVATED HEIGHT H,
LOAD WEIGHT W,
STEERING ANGLE $\theta$,
VEHICLE VELOCITY V — S1

COMPUTE MAXIMUM ALLOWABLE
VEHICLE VELOCITY Vmax — S2

S3 — Vmax < V — YES → BRAKE ON, ACCELERATOR OFF — S4

NO

S5 — V1 > V — YES → BRAKE OFF — S6

NO

S7 — $\theta$1 > $\theta$ — YES → ACCELERATOR ON — S8

NO

# FIG. 11

# FIG. 12

START

DETECT STATE QUANTITY
ELEVATED HEIGHT H,
LOAD WEIGHT W,
STEERING ANGLE $\theta$,
VEHICLE VELOCITY V  — S1

COMPUTE MAXIMUM ALLOWABLE
VEHICLE VELOCITY Vmax  — S2

S3  Vmax < V

YES → BRAKE ON, ACCELERATOR OFF  S4

NO

S5  $\theta 1 > \theta$

YES → BRAKE OFF, ACCELERATOR ON  S6

NO

# FIG. 13

(1) BRAKE ON, ACCELERATOR OFF

OVERTURN
(CURRENT MACHINE)

VELOCITY V

Vmax

(2) BRAKE OFF,
ACCELERATOR ON

$\theta$ 1

STEERING ANGLE $\theta$

# FIG. 14

START

DETECT STATE QUANTITY
ELEVATED HEIGHT H,
LOAD WEIGHT W,
STEERING ANGLE $\theta$,
VEHICLE VELOCITY V —S1

COMPUTE MAXIMUM ALLOWABLE
VEHICLE VELOCITY Vmax —S2

S3 — Vmax < V

YES → S4 BRAKE ON, ACCELERATOR OFF

NO

S5 — $\theta 2 > \theta$

YES → S6 BRAKE OFF

NO

S7 — $\theta 1 > \theta$

YES → S8 ACCELERATOR ON

NO

# FIG. 15

(1) BRAKE ON, ACCELERATOR OFF

OVERTURN
(CURRENT MACHINE)

VELOCITY V

Vmax

(3) ACCELERATOR ON

(2) BRAKE OFF

$\theta 1$     $\theta 2$

STEERING ANGLE $\theta$

## FIG. 16

START

DETECT STATE QUANTITY
ELEVATED HEIGHT H,
LOAD WEIGHT W,
STEERING ANGLE $\theta$,
VEHICLE VELOCITY V  — S1

COMPUTE MAXIMUM ALLOWABLE
VEHICLE VELOCITY Vmax  — S2

S3: $Vmax < V$
YES → S4: BRAKE ON, ACCELERATOR OFF
NO ↓

S5: $V1 > V$
YES → S6: HALF BRAKING FORCE
NO ↓

S7: $V2 > V$
YES → S8: BRAKE OFF, ACCELERATOR ON
NO

# FIG. 17

(1) BRAKE ON, ACCELERATOR OFF

OVERTURN
(CURRENT MACHINE)

(2) HALF BRAKING FORCE

Vmax
V1

V2

(3) BRAKE OFF,
ACCELERATOR ON

VELOCITY V

STEERING ANGLE θ

# FIG. 18

START

DETECT STATE QUANTITY
ELEVATED HEIGHT H,
LOAD WEIGHT W,
STEERING ANGLE $\theta$,
VEHICLE VELOCITY V ⟶ S1

COMPUTE MAXIMUM ALLOWABLE
VEHICLE VELOCITY Vmax ⟶ S2

S3
Vmax < V ─ YES ⟶ BRAKE ON,
ACCELERATOR OFF ⟶ S4

NO

S5
V1 > V ─ YES ⟶ HALF BRAKING
FORCE ⟶ S6

NO

S7
V2 > V ─ YES ⟶ BRAKE OFF ⟶ S8

NO

S9
V3 > V ─ YES ⟶ ACCELERATOR
ON ⟶ S10

NO

# FIG. 19

(1) BRAKE ON, ACCELERATOR OFF

OVERTURN
(CURRENT MACHINE)

(2) HALF BRAKING FORCE

(3) BRAKE OFF

$V_1$ Vmax
$V_2$
$V_3$

(4) ACCELERATOR ON

VELOCITY V

STEERING ANGLE $\theta$

# FIG. 20

BRAKE DEVICE

EP 1 975 115 A1

FIG. 21

CONTROLLER

BRAKE DEVICE

20

218

218a

18c

118j

118h

M

18d

(B)        (C)

218b

18e

EP 1 975 115 A1

38

FIG. 22

EP 1 975 115 A1

## FIG. 23

ELEVATED HEIGHT H

LOAD WEIGHT W

BRAKING FORCE CALCULATOR — 320A

VEHICLE VELOCITY V

STEERING ANGLE θ

BRAKE JUDGING UNIT — 320B

BRAKING FORCE COMMAND UNIT — 320C

EP 1 975 115 A1

# FIG. 24

# FIG. 25

FIG. 26

BRAKE DEVICE

418

331

118j

118h

18c    18c    5

321    318a    325    423

319

327    18c    18c    429

M    431

18e    CONTROLLER

420

(A)    (B)    (C)

418b

EP 1 975 115 A1

42

FIG. 27

ELEVATED HEIGHT H

LOAD WEIGHT W

VEHICLE VELOCITY V

STEERING ANGLE θ

BRAKING FORCE CALCULATOR 320A

BRAKE JUDGING UNIT 320B

BRAKING FORCE COMMAND UNIT 420C

FIG. 28

BRAKE DEVICE

EP 1 975 115 A1

# FIG. 29

EP 1 975 115 A1

# FIG. 30

601

BRAKE CONTROL DEVICE
⇧

618

18

8b

5b

5a

605

# FIG. 31

701

| 22 | PRESSURE SENSOR | LIFT PRESSURE P → |
| 29 | STEERING ANGLE SENSOR | STEERING ANGLE θ → |
| 23 | VELOCITY SENSOR | VEHICLE VELOCITY V → |

CONTROLLER

BRAKING COMMAND Pb1 →

BRAKE DEVICE

720

5

FIG. 32

```
          ( START )
              |
              |                          S71
              ▼
 NO      ╱ STEERING ANGLE ╲
◄────────   |θ| < 5°
         ╲             ╱
              | YES
              |                          S72
              ▼
 NO      ╱   BRAKING      ╲
◄────────  COMMAND ON?
         ╲             ╱
              | YES
              ▼
┌───────────────────────────┐
│   COMPUTE TOTAL MASS      │── S73
│        m=f (P)            │
└───────────────────────────┘
              |
              ▼
┌───────────────────────────┐
│   COMPUTE BEFORE AND      │
│   AFTER ACCELERATION      │── S74
│                           │
│        α = dV/dt          │
└───────────────────────────┘
              |
              ▼
┌───────────────────────────┐
│   COMPUTE BRAKING FORCE   │── S75
│        Fb=f (m, α)        │
└───────────────────────────┘
              |
              ▼
┌───────────────────────────┐
│   CALCULATE PRIMARY       │── S76
│   RELATIONAL EXPRESSION   │
└───────────────────────────┘
              |
              ▼
┌───────────────────────────┐
│   CORRECTION OF BRAKING   │
│      COMMAND Pb           │── S77
│                           │
│     Pb1=Pb × K0/K1        │
└───────────────────────────┘
              |
              ▼
          ( END )
```

$m=f (P)$

$\alpha = \dfrac{dV}{dt}$

$Fb=f (m, \alpha)$

$Pb1=Pb \times \dfrac{K0}{K1}$

FIG. 33

## INTERNATIONAL SEARCH REPORT

| International application No. |
| --- |
| PCT/JP2007/050469 |

A. CLASSIFICATION OF SUBJECT MATTER
*B66F9/24*(2006.01)i, *B60W10/04*(2006.01)i, *B60W10/18*(2006.01)i, *B60W30/04* (2006.01)i, *B66F9/22*(2006.01)i, *B60T7/12*(2006.01)n

According to International Patent Classification (IPC) or to both national classification and IPC

B. FIELDS SEARCHED

Minimum documentation searched (classification system followed by classification symbols)
B66F9/24, B60W10/04, B60W10/18, B60W30/04, B66F9/22, B60T7/12

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2005-200212 A  (Mitsubishi Heavy Industries, Ltd.),<br>28 July, 2005 (28.07.05),<br>Full text; Figs. 1 to 31<br>& WO 2006/054678 A1 | 1-9,12-16<br>10-11 |
| Y | JP 11-310399 A  (Toyoda Automatic Loom Works, Ltd.),<br>09 November, 1999 (09.11.99),<br>Par. Nos. [0035] to [0046]; Fig. 3<br>(Family: none) | 1-9,12-16 |
| Y | JP 2002-96999 A  (Komatsu Forklift Co., Ltd.),<br>02 April, 2002 (02.04.02),<br>Par. Nos. [0010] to [0014]; Figs. 2 to 3<br>(Family: none) | 12 |

| [X]  Further documents are listed in the continuation of Box C. | [ ]  See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 February, 2007 (15.02.07) | Date of mailing of the international search report<br>27 February, 2007 (27.02.07) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/050469 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2004-504987 A  (Knorr-Bremse Systeme Fuer Nutz-Fahrzeuge GmbH), 19 February, 2004 (19.02.04), Par. No. [0023]; Fig. 1 & WO 2002/009990 A1     & US 2004/0032162 A1 | 13 |
| A | JP 11-322297 A  (Toyoda Automatic Loom Works, Ltd.), 24 November, 1999 (24.11.99), Full text; Figs. 1 to 4 (Family: none) | 1-16 |

Form PCT/ISA/210 (continuation of second sheet) (April 2005)

**REFERENCES CITED IN THE DESCRIPTION**

**Patent documents cited in the description**

- JP 2005200212 A